# EUROPÄISCHE PATENTANMELDUNG

(11) **EP 4 245 521 A1**
(43) Veröffentlichungstag der Anmeldung: **20.09.2023**
(21) Anmeldenummer: 22162417.4
(22) Anmeldetag: 16.03.2022
(51) Int. Cl.: B32B 15/08, B32B 15/082, B32B 27/36, C08F 279/04, C08L 55/02, C08L 69/00, C25D 5/56, C23C 14/35, F21V 7/00, C23C 18/16, F21S 2/00, F21V 33/00

(54) **METALLSCHICHT ENTHALTENDER MEHRSCHICHTKÖRPER FÜR DIFFUSE DURCHLEUCHTUNG**

(71) Anmelder: Covestro Deutschland AG, 51373 Leverkusen (DE)
(72) Erfinder: Seidel, Andreas, 41542 Dormagen (DE); Piermatteo, Ciro, 51369 Leverkusen (DE)
(74) Vertreter: Levpat

(57) **Zusammenfassung**

Die vorliegende Erfindung betrifft einen Mehrschichtkörper umfassend
(I) eine Trägerschicht aus einer besonderen thermoplastischen Polycarbonat-Formmasse und
(II) eine Metallschicht, die eine oder mehrere Aussparungen aufweist,
sowie eine Beleuchtungs- oder Anzeigeeinheit umfassend den Mehrschichtkörper und eine Lichtquelle, ein Verfahren zur Herstellung des Mehrschichtkörpers sowie die Verwendung der besonderen thermoplastischen Polycarbonat-Formmasse als Trägerschicht eines solchen Mehrschichtkörpers.

## Beschreibung

Die vorliegende Erfindung betrifft einen Mehrschichtkörper umfassend eine Trägerschicht aus einer thermoplastischen Polycarbonat-Formmasse und eine Metallschicht, eine Beleuchtungs- oder Anzeigeeinheit umfassend den Mehrschichtkörper und eine Lichtquelle, ein Verfahren zur Herstellung des Mehrschichtkörpers sowie die Verwendung einer thermoplastischen Polycarbonat-Formmasse als Trägerschicht eines solchen Mehrschichtkörpers.

Im Automobilinnenraum wie auch in Automobilkarosserieanwendungen kommen vermehrt dekorative ambiente Beleuchtungselemente bzw. hinterleuchtete Funktions-/Displayelemente zum Einsatz. Ein Markttrend besteht darin, die Beleuchtung bzw. die Darstellung von Funktion nur bei Bedarf einzuschalten/einzublenden, z.B. um eine Tag-Nacht-Differenzierung des Erscheinungsbildes solcher Elemente zu realisieren oder um durch eine solche ambiente dynamische Beleuchtung die Raumwahmehmung im Automobilinnenraum zu intensivieren bzw. die Abbildung von Informationen bedarfs- und situationsgerecht zu ermöglichen.

Bei diesen Beleuchtungs- oder Funktionselementen handelt es sich beispielsweise um (partiell) durchleuchtbare Zierleisten, Zierblenden, Verkleidungspaneele, Lenkradabdeckungen, Konsolen, Griffe und Instrumententafelträger bzw. um Bedienelemente, mit denen verschiedene Funktionen des Fahrzeugs bedient werden können, wie beispielsweise Start/Stopp-Knöpfe sowie Bedienelemente für die Fahrzeugbeleuchtung oder Klimaregulierung oder um Anzeigeelemente, mit denen Informationen bei Bedarf angezeigt werden können.

Derartige Bauteile bzw. Bauelemente werden im Allgemeinen aus technischen Thermoplasten hergestellt, da diese in großtechnisch einfach und kostengünstig darzustellenden Umformungsverfahren, insbesondere dem Spritzguss, eine hohe Bauteilindividualität und Funktionsintegration erlauben.

Es besteht oft der Wunsch, die Sichtoberfläche derartiger, aus technischen Thermoplasten hergestellten Bauteile bzw. Bauelemente mit einer dekorativen Schicht zu versehen, mit dem Ziel, ihre Optik, Haptik und/oder Beständigkeit gegenüber Umwelteinflüssen, beispielsweise die Licht-, UV- oder Wärmebeständigkeit der Oberflächenoptik, die Chemikalienbeständigkeit oder Kratzfestigkeit, den technischen Anforderungsprofilen an solche Bauteile bzw. dem Kundenwunsch nach hochwertiger und differenzierter Bauteilanmutung anzupassen. Metallische Oberflächen sind in diesem Zusammenhang sehr gefragt. Sie können grundsätzlich über unterschiedliche Verfahren auf den thermoplastischen Grundkörper aufgebracht werden, beispielsweise durch Metallbedampfung, Hinterspritzung von Metallfolien oder Galvanisierung. Insbesondere die Galvanisierung hat sich in der Industrie als Verfahren zur Aufbringung von Metallschichten auf Kunststoffträger bewährt, wenn ein mechanisch gegen Abrieb oder Korrosion beständiges Bauteil mit guter Anhaftung der Metallschicht an den Kunststoffgrundträger angestrebt wird, wie das bei beispielsweise automobilen Anwendungen im Innen- und Außenbereich der Fall ist.

Zur Erzielung einer Durchleuchtbarkeit werden Durchbrüche in der Metallschicht appliziert, d.h. in bestimmten Bereichen des Bauteils oder Bauelements entweder erst gar keine Metallschicht aufgetragen oder diese in einem nachgeschalteten Schritt wieder bis auf den Kunststoffgrundträger abgetragen. Diese Durchbrüche werden im Folgenden auch als Aussparungen oder Durchbrechungen bezeichnet. Die Aussparungen können beispielsweise die Form von Symbolen, Mustern, Löchern, Linien oder Zeichen aufweisen. Ebenso ist es möglich, dass es sich um punktförmige Aussparungen handelt, die in Form von Symbolen, Mustern, Löchern, Linien oder Zeichen angeordnet sind.

Zur Erzielung eines durchleuchtbaren Bauteils oder Bauelements muss jedoch auch der Kunststoffgrundträger in seiner für das jeweilige Bauteil typischen Dicke durchleuchtbar sein, d.h. eine gute Lichttransmission aufweisen. Üblicherweise wird es angestrebt, dass die Trägerschicht mittels einer Lichtquelle mit sichtbarem Licht (d.h. Licht im Wellenlängenbereich von 380 bis 780 nm) durchleuchtet werden kann.

Für einen ansprechenden optischen Eindruck ist es zudem oft wünschenswert, dass Kunststoffgrundträger das Licht einer punktförmigen Lichtquelle, beispielsweise einer LED, zumindest in einem gewissen Maße streut und damit ein diffuses Beleuchtungsbild des durchleuchteten Bauteils realisiert wird. Andernfalls wäre die Lichtquelle für den Betrachter sichtbar und/oder der gewünscht visuelle Effekt beim Einschalten der Lichtquelle nur auf einen kleinen Bereich des Mehrschichtkörpers begrenzt. Zur Erzielung eines solchen diffusen Lichteindrucks einer von einer punktförmigen Lichtquelle durchstrahlten Fläche des Mehrschichtkörpers ist es erforderlich, dass die Trägerschicht einerseits eine möglichst hohe Transmission des eingestrahlten sichtbaren Lichts und andererseits eine möglichst hohe, durch Lichtstreuung bedingte Lichtdiffusität, d.h. einen möglichst hohen Halbwertswinkel des durch eine punktförmige Lichtquelle nach Durchtritt durch die Trägerschicht resultierenden Lichtkegels, aufweist. Je höher dieser Halbwertswinkel ist, desto räumlich homogener ist die wahrgenommene Beleuchtungsintensität des von einer punktförmigen Lichtquelle ausgehenden Lichts nach Durchtritt durch die Trägerschicht. Bei höherem Halbwertswinkel der Trägerschicht können somit auch größere Flächen durch punktförmige Lichtquellen mit räumlich weitgehend homogener Lichtintensität durchstrahlt werden. Im Allgemeinen sind Transmission und Lichtdiffusivität (Halbwertswinkel) eines Materials nicht unabhängig voneinander einstellbar und in der Regel gegenläufig zueinander. Eine Optimierung der Lichtdiffusivität durch Materialmodifizierung, beispielsweise durch Änderung seiner Zusammensetzung, resultiert somit meist in abnehmender Transmission. Beide Größen sind dabei insbesondere auch von der durchleuchteten Materialschichtdicke abhängig, wobei mit zunehmender Schichtdicke die Transmission ab- und die Lichtdiffusivität eines transluzenten Materials zunimmt.

Durchleuchtbare Mehrschichtkörper mit einer Metallschicht sind bekannt. DE202013009793 U1 offenbart ein galvanisch dekoriertes Bauteil mit einer in der Oberfläche durchleuchtbar eingebrachten Symbolik oder Struktur, bei dem das Bauteil aus einem galvanisierbaren Kunststoff im Spritzgießverfahren hergestellt wird und die Symbolik aus einem nicht galvanisierbaren, galvanikstabilen Lacksystem aufgebracht wird oder die Symbolik auf das Bauteil aufgedruckt wird. Das Bauteile kann nach erfolgtem Galvanisierprozess mittels geeigneter Lichtquelle durch die unbeschichtete, metallfrei gestaltete Rückseite des Bauteils hindurch beleuchtet werden und die Symbolik wird dabei sichtbar.

Ein ähnlicher Ansatz wird in DE102010053165 A1 beschrieben. Es wird ein Verfahren zur Herstellung insbesondere galvanisierter Kunststoffbauteile mit haptischen und optischen Unterbrechungsstrukturen offenbart, bei dem auf einem galvanisierfähigen Kunststoffbauteil Inselstrukturen aus galvanostabilem Lack aufgebracht werden und die anschließende Galvanisierung der Bauteile an den unbeschichteten Bereichen erfolgt, so dass ausschließlich die Inseln in den umliegenden Strukturen unbeschichtet bleiben und die Strukturen um die Inseln beschichtet werden.

DE10208674A1 offenbart ein Verfahren zur Herstellung galvanisch beschichteter Elemente mit hinterleuchtbaren Symbolen bei dem die zunächst gebildete erste Metallschicht partiell abgetragen und so ein Symbol freigelegt wird, bevor in einem letzten Schritt die Fertigstellung der galvanischen Beschichtung auf der ersten Metallschicht erfolgt und das freigelegte Symbol von der Galvanisierung ausgespart wird. Die Anmeldung offenbart, dass besonders gute Ergebnisse erzielt werden, wenn der Grundkörper aus ABS (Acrylnitril-Butadien-Styrol) oder ABS/PC (Acrylnitril-Butadien-Styrol/Polycarbonat) gefertigt ist. Das Abtragen der ersten Metallschicht kann mittels Ätzen erfolgen, insbesondere bei einer Verwendung von Kupfer. Bei Verwendung von Nickel mit einer geringeren Schichtdicke kann das Abtragen auch mittels Laserablation erfolgen.

WO2017063768A1 offenbart ein metallisiertes Kunststoffbauteil mit durchleuchtbarer Struktur im Tag- und Nachtdesign sowie ein Verfahren zur Herstellung des Kunststoffbauteils. Das metallisierte Kunststoffbauteil umfasst einen Grundkörper aus wenigstens einem lichtdurchlässigen Kunststoff, auf den eine Metallschicht aufgebracht ist, in welche wenigstens eine durchleuchtbare Struktur in Form einer Punktmatrix eingebracht wird. Es wird offenbart, dass der Kunststoffrohling bevorzugt wenigstens teilweise aus Polyamid, ABS oder ABS/Polycarbonat-Blend besteht.

DE10320237A1 offenbart ein Verfahren zur Herstellung durchleuchtbarer, galvanisch veredelter Thermoplastteile und durchleuchtbarer Thermoplastteile mit galvanisch veredelter Oberfläche umfassend folgende Verfahrensschritte: ein Thermoplastteil aus einem transparenten, amorphen Kunststoff wird mit einer opaken Schicht aus einem galvanisierbaren Kunststoff überzogen; der galvanisierbare Kunststoff wird im Bereich der Symbole durch einen verbrennenden Laserstrahl abgetragen; auf den galvanisierbaren Kunststoff wird eine Galvanikschicht aufgebracht. Es wird offenbart, dass eine besonders effektive Galvanisierung mit Acrylnitril-Butadien-Styrol-Copolymeres (ABS) als galvanisierbaren Kunststoff erreicht wird.

An solche Bauteile bzw. Bauelemente für den Einsatz im Automobil Innen- und Außenbereich werden weitere anwendungstechnische Anforderungen, wie beispielsweise gute thermoplastische Verarbeitbarkeit (Schmelzefließfähigkeit), hohe Materialduktilität, insbesondere auch bei tiefen Temperaturen und hohe Wärmeformbeständigkeit gestellt. Für solche Anwendungen in Frage kommende und deshalb in derartigen Einsatzfeldern etablierte Thermoplaste wie Polycarbonat, Acrylnitril-Butadien-Styrol-Terpolymere (ABS) und Blends aus diesen beiden Thermoplasten weisen entweder ein schlechtes Galvanisierungsverhalten und zuweilen auch zu schlechte Lichtdiffusivität auf und/oder mit ihnen wird eine nur unzureichende Metall-Kunststoff-Verbundhaftung in etablierten Galvanisierungsverfahren erzielt, was auf transparentes Polycarbonat oder mit Streuadditiven versehenen Polycarbonat-Compounds zutrifft, oder aber sie zeigen zwar ein gutes Galvanisierungsverhalten, dafür aber unzureichende Lichttransmission , was auf bisher in diesem Anwendungsfeld eingesetzte ABS-Kunststoffe und ABS/PC- bzw. PC/ABS-Blends zutrifft.

Es war daher wünschenswert, einen diffus mit verbesserter Lichtausbeute durchleuchtbaren Mehrschichtkörper enthaltend einen Grundträger aus einem thermoplastisch verarbeitbaren Material und eine mit Aussparungen versehene dekorative Metallschicht bereitzustellen, wobei das thermoplastisch verarbeitbare Material die allgemeinen anwendungstechnischen Anforderungen erfüllt, die von der Automobilindustrie an Materialien zur Herstellung von Bauteilen für den Einsatz im Innen- und Außenbereich gestellt werden. Weiterhin war es wünschenswert, ein Verfahren zur Herstellung eines solchen Mehrschichtkörpers bereitzustellen, in dem die dekorative Metallschicht über ein in der Kunststoffgalvanisierung industriell etabliertes elektrochemisches Abscheidungsverfahren auf den Grundträger aus einem thermoplastisch verarbeitbaren Material aufgebracht wird und dabei eine stabile Verbundhaftung erzielt wird.

Dafür war es erforderlich, dass das Trägermaterial einerseits eine Kombination aus verbesserter Transmission für Licht im sichtbaren Wellenlängenbereich und hoher Lichtdiffüsivität, d.h. einen großen Halbwertswinkel und ein gutes Verhalten in einem industriell etablierten Kunststoffgalvanisierungsprozess sowie andererseits gute thermoplastische Verarbeitbarkeit (Schmelzefließfähigkeit), hohe Materialduktilität insbesondere auch bei tiefen Temperaturen und hohe Wärmeformbeständigkeit aufweist.

Überraschendweise wurde gefunden, dass ein Mehrschichtkörper,
umfassend
(I) eine Trägerschicht aus einer thermoplastischen Formmasse enthaltend
   A) mindestens einen Vertreter ausgewählt aus der Gruppe bestehend aus aromatischem Polycarbonat und aromatischen Polyestercarbonat,
   B) kautschukmodifiziertes Vinyl(co)polymerisat aus
      B.1) 80 bis 95 Gew.-%, bezogen auf das kautschukmodifizierte Vinyl(co)polymerisat B, Struktureinheiten abgeleitet von wenigstens einem Vinylmonomeren und
      B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
         wobei das kautschukmodifizierte Vinyl(co)polymerisat B
            (i) eine disperse Phase bestehend aus
               (i.1) mit Vinyl(co)polymerisat aus Struktureinheiten gemäß B.1 gepfropften Kautschukpartikeln und
               (i.2) in den Kautschukpartikeln als separierte disperse Phase eingeschlossenes Vinyl(co)polymerisat ebenfalls aus Struktureinheiten gemäß B.1
               und
            (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
         enthält,
         wobei die disperse Phase gemäß (i) einen mittleren Durchmesser D50 gemessen per Ultrazentrifugation von 0,7 bis 2,0 µm aufweist,
   C) optional mindestens eine weitere Komponente ausgewählt aus Polymeradditiven und polymeren Blendpartnern,
   wobei die thermoplastische Formmasse weniger als 2 Gew.-% an von Komponente B) verschiedenen, kautschukbasierten Pfropfpolymeren enthält und
   wobei die thermoplastische Formmasse einen Kautschukgehalt von mindestens 2,0 Gew.-% aufweist und
(II) eine Metallschicht, bevorzugt eine mehrlagige Metallschicht, die mindestens eine Aussparung aufweist,
die genannte Aufgabe löst.

Die Trägerschicht (I) wird im Rahmen dieser Anmeldung auch synonym als Kunststoffträger oder Kunststoffträgerschicht bezeichnet.

In bevorzugter Ausführungsform enthält die thermoplastische Formmasse der Trägerschicht (I)
30 bis 85 Gew.-%, weiter bevorzugt 50 bis 82 Gew.-%, noch weiter bevorzugt 58 bis 82 Gew.-%, am meisten bevorzugt 65 bis 75 Gew.-% der Komponente A,
14 bis 69 Gew.-%, weiter bevorzugt 17 bis 49 Gew.-%, noch weiter bevorzugt 17 bis 41 Gew.-%, am meisten bevorzugt 24 bis 34 Gew.-% der Komponente B,
0,05 bis 20 Gew.-%, weiter bevorzugt 0,1 bis 10 Gew.-%, noch weiter bevorzugt 0,2 bis 5 Gew.-%, am meisten bevorzugt 0,3 bis 2 Gew.-% der Komponente C.

In bevorzugter Ausführungsform enthält die Formmasse der Trägerschicht (I) weniger als 1 Gew.-%, weiter bevorzugt weniger als 0,5 Gew.-%, noch weiter bevorzugt weniger als 0,2 Gew.-% an von Komponente B) verschiedenen, kautschukbasierten Pfropfpolymeren. Am meisten bevorzugt enthält die Formmasse keinerlei von Komponente B) verschiedene, kautschukbasierte Pfropfpolymere.

In bevorzugter Ausführungsform weist die Formmasse der Trägerschicht (I) einen Kautschukgehalt im Bereich von 2,0 bis 6 Gew.-%, weiter bevorzugt im Bereich 2,5 bis 5 Gew.-%, noch weiter bevorzugt im Bereich 2,6 bis 4,1 Gew.-%, am meisten bevorzugt im Bereich 2,7 bis 3,3 Gew.-% auf.

Die zuvor genannten Vorzugsbereiche der Komponenten A und B sowie der Komponente C können beliebig miteinander kombiniert werden.

Die Trägerschicht (I) besteht in bevorzugter Ausführungsform aus einer thermoplastischen Formmasse, welche zu mindestens 80 Gew.-%, weiter bevorzugt zu mindestens 95 Gew.-%, stärker bevorzugt zu mindestens 99 Gew.-% am stärksten bevorzugt zu 100 Gew.-% aus den Komponenten A, B und C besteht.

Der Mehrschichtkörper ist dazu geeignet mittels einer Lichtquelle mit sichtbarem Licht durchleuchtet zu werden, das heißt der Mehrschichtkörper ist durchleuchtbar. Die Lichtquelle ist so angeordnet, dass das Licht zunächst auf die Trägerschicht (I) trifft und durch die Aussparungen in der Metallschicht (II) austritt. Bevorzugt handelt es sich bei der Lichtquelle um eine LED Lichtquelle.

Durchleuchtbar bedeutet, dass sich beim Einschalten der Lichtquelle der visuelle Eindruck auf der der Lichtquelle abgewandten Seite, d.h. der Sichtseite des Bauteils oder Bauelements im Einbauzustand ändert.

In bevorzugter Ausführungsform weist der Mehrschichtkörper mindestens in Teilbereichen, d.h. an den Aussparungen, in seiner tatsächlichen dortigen Dicke bei mindestens einer Wellenlänge im Wellenlängenbereich des Spektrums von 380 bis 780 nm einen Transmissionsgrad von mindestens 10 % , weiter bevorzugt mindestens 25% noch weiter bevorzugt mindestens 40 % und am meisten bevorzugt von mindestens 45 % auf, wobei der Transmissionsgrad aus dem Transmissionsspektrum ermittelt wird, welches gemäß der Vorgaben in der DIN/ISO 13468-2 in der Version von 2006 gemessen wird.

Ein weiterer Gegenstand der Erfindung ist die Verwendung einer Formmasse aus den oben angegebenen Komponenten A, B und C und den weiteren angegebenen Merkmalen als Trägerschicht (I) in einem wie oben beschriebenen Mehrschichtkörper.

Ein weiterer Gegenstand der Erfindung ist eine Beleuchtungs- oder Anzeigeeinheit umfassend den Mehrschichtkörper wie oben angegeben und eine Lichtquelle, welche Licht mit mindestens einer Wellenlänge im Wellenlängenbereich des Spektrums von 380 bis 780 nm ausstrahlt, wobei die Lichtquelle so angeordnet ist, dass die Trägerschicht von dem von der Lichtquelle abgestrahlten Licht durchstrahlt wird.

Ein weiterer Gegenstand der Erfindung ist ein Verfahrens zur Herstellung eines durchleuchtbaren Mehrschichtkörpers, umfassend die Schritte
(1) Formung eines Kunststoffträgers aus einer wie oben beschriebenen thermoplastischen Formmasse,
(2) optional Abdeckung zumindest eines Teils der der Sichtseite des Mehrschichtkörpers abgewandten Oberfläche des Kunststoffträgers sowie optional eines Teils der Sichtseitenoberfläche des Kunststoffträgers mit einer galvanostabilen Schicht, bevorzugt einem Lack, welche im Verfahrensschritt (3a) die chemische, elektrochemische oder physikalische Metallabscheidung und somit im Verfahrensschritt (3c) die Galvanisierung in diesem Bereich des Kunststoffträgers lokal verhindert,
(3) elektrochemische Abscheidung einer bevorzugt mehrlagigen Metallschicht auf dem im Schritt (2) nicht mit einer galvanostabilen Schicht abgedeckten Teil der Oberflächen des Kunststoffträgers, wobei der Verfahrensschritt (iii) folgende Teilschritte umfasst:
   (3a) Erzeugung einer dünnschichtigen Metallschicht, bevorzugt einer Schicht aus Palladium, Kupfer oder Nickel, auf dem Kunststoffträger in einem chemischen, elektrochemischen oder physikalischen Verfahren, bevorzugt ausgewählt aus Abscheiden aus kolloidaler Lösung, Direktmetallisierung oder Bedampfung,
   (3b) optional partielles Abtragen der im Verfahrensschritt (3a) erzeugten dünnschichtigen Metallschicht zur Erzeugung von nicht mit der Metalldünnschicht bedeckten Bereichen auf dem Kunststoffträger, bevorzugt durch ein Verfahren ausgewählt aus Ätzung oder Laserablation,
   (3c) galvanisches Fertigstellen einer bevorzugt mehrlagigen metallischen Oberflächenbeschichtung umfassend mindestens einen elektrochemischen Metallabscheidungsschritt, wobei die im Verfahrensschritt (3b) erzeugten nicht mit der Metalldünnschicht bedeckten Bereiche auf dem Kunststoffträger nicht galvanisiert werden, und
(4) optional lokale Entfernung der auf die Kunststoffträgeroberfläche aufgebrachten bevorzugt mehrlagigen Metallschicht durch mechanische, chemische und/oder physikalische Verfahren unter Ausbildung von Durchbrechungen der Metallschicht und lokaler Freilegung der Kunststoffträgeroberfläche,
dadurch gekennzeichnet, dass mindestens einer der optionalen Verfahrensschritte (2), (3b) und (4) in dem Verfahren zur Anwendung kommt und dadurch mindestens eine Aussparung in der bevorzugt mehrlagigen Metallschicht auf der Sichtseite des Mehrschichtkörpers resultiert und, sofern auch die der Sichtseite abgewandte Seite des Mehrschichtkörpers im Verfahrensschritt (3) mit einer Metallschicht beaufschlagt wird, auch auf dieser der Sichtseite abgewandten Seite des Mehrschichtkörpers mindestens eine Aussparung in der Metallschicht resultiert.

In dem Fall, dass sowohl die Sichtseite als auch die der Sichtseite abgewandte Seite des Mehrschichtkörpers im Verfahrensschritt (3) mit einer Metallschicht elektrochemisch beaufschlagt werden, werden die durch mindestens einen der optionalen Verfahrensschritte (2), (3b) und (4) in beiden Seiten des Mehrschichtkörpers eingebrachten mindestens eine Aussparungen bevorzugt in direkt gegenüberliegenden Bereichen der Trägerschicht (I) realisiert.

Unter "Sichtseite" des Mehrschichtkörpers wird diejenige Seite verstanden, die in der finalen Anwendung des Mehrschichtkörpers, das heißt in seiner Einbausituation, in der angestrebten Funktion des Mehrschichtkörpers sichtbar ist. Ist der Mehrschichtkörper Bestandteil einer Beleuchtungs- oder Anzeigeeinheit, in dem der Mehrschichtkörper von einer Lichtquelle durchleuchtet wird, so ist die Sichtseite die der Lichtquelle in der Beleuchtungs- oder Anzeigeeinheit abgewandte Seite des Mehrschichtkörpers.

Bevorzugt wird nur die Sichtseite des Mehrschichtkörpers mit einer Metallschicht versehen.

Bevorzugte Ausführungsformen des Verfahrens sind weiter unten beschrieben.

### Zusammensetzung der Trägerschicht

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934). Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 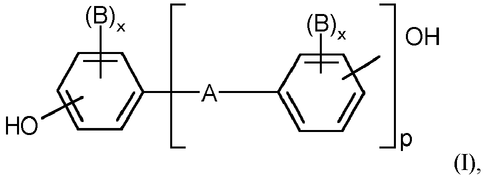 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 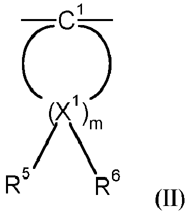 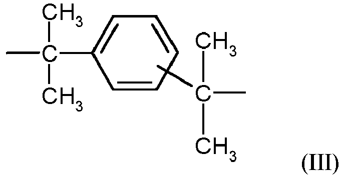
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α,-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel M_{w}) von bevorzugt 20000 bis 40000 g/mol, weiter bevorzugt 24000 bis 32000 g/mol, besonders bevorzugt 26000 bis 30000 g/mol, gemessen durch GPC (Gelpermeationschromatographie) kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Esterals auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Bevorzugt wird als Komponente A lineares Polycarbonat auf Basis von ausschließlich Bisphenol A eingesetzt.

### Komponente B

Bei Komponente B handelt es sich um kautschukmodifizierte Vinyl(co)polymerisate aus
B.1) 80 bis 95 Gew.-%, bevorzugt 83 bis 93 Gew.-%, weiter bevorzugt 85 bis 92 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bevorzugt 7 bis 17 Gew.-%, weiter bevorzugt 8 bis 15 Gew.-%, bezogen auf das kautschukmodifizierte Vinyl(co)polymerisat B, einer oder mehrerer kautschukelastischer Pfropfgrundlagen mit Glasübergangstemperaturen T_{g} < -50°C, bevorzugt von < -60°C, besonders bevorzugt < -70°C enthaltend mindestens 50 Gew.-%, bevorzugt mindestens 70 Gew.-%, besonders bevorzugt 100 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
   (i.1) mit Vinyl(co)polymerisat aus Struktureinheiten gemäß B.1 gepfropften Kautschukpartikeln und
   (i.2) in den Kautschukpartikeln als separierte disperse Phase eingeschlossenes Vinyl(co)polymerisat ebenfalls aus Struktureinheiten gemäß B.1
      und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,
und wobei die disperse Phase gemäß (i) einen mittleren Durchmesser D50 gemessen per Ultrazentrifugation von 0,7 bis 2,0 µm, bevorzugt von 0,7 bis 1,5 µm, insbesondere von 0,7 bis 1,2 aufweist.

Die Glasübergangstemperatur T_{g} wird, sofern in der vorliegenden Erfindung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die kautschukmodifizierten Vinyl(co)polymerisate gemäß Komponente B weisen eine Schmelzeflussrate (MVR), gemessen gemäß ISO 1133 (Version von 2012) bei 220°C mit einer Stempellast von 10 kg, von bevorzugt 2 bis 20 ml/10min, besonders bevorzugt 3 bis 15 ml/10min, insbesondere 4 bis 8 ml/10min auf. Kommen Mischungen aus mehreren kautschukmodifizierten Vinyl(co)polymerisaten als Komponente B zum Einsatz, so gelten die bevorzugten MVR-Bereiche für den Mittelwert des über die Massenanteile der Komponenten in der Mischung gewichteten MVRs der Einzelkomponenten.

Derartige kautschukmodifizierte Vinyl(co)polymerisate B werden beispielsweise hergestellt durch radikalische Polymerisation, bevorzugt im Masse-Polymerisationsverfahren, von
B.1 80 bis 95 Gew.-%, bevorzugt 83 bis 93 Gew.-%, besonders bevorzugt 85 bis 92 Gew.-%, bezogen auf das kautschukmodifizierte Vinyl(co)polymerisat B, wenigstens eines Vinylmonomeren in Anwesenheit von
B. 2 5 bis 20 Gew.-%, bevorzugt 7 bis 17 Gew.-%, besonders bevorzugt 8 bis 15 Gew.-%, bezogen auf das kautschukmodifizierte Vinyl(co)polymerisat B, einer oder mehrerer kautschukelastischer Pfropfgrundlagen mit Glasübergangstemperaturen < -50°C, bevorzugt < -60°C, besonders bevorzugt < -70°C, enthaltend mindestens 50 Gew.-%, bevorzugt mindestens 70 Gew.-%, besonders bevorzugt 100 Gew.-% bezogen auf B.2, an vom 1,3-Butadien abgeleiteten Struktureinheiten.

Bei dem zur Herstellung des kautschukmodifizierten Vinyl(co)polymerisats B bevorzugt angewandten Masse-Polymerisationsverfahren erfolgt sowohl die Polymerisation der Vinylmonomeren gemäß B.1als auch eine Pfropfung des so entstehenden Vinyl(co)polymers auf die kautschukelastische Pfropfgrundlage gemäß B.2. Des Weiteren erfolgt bei dieser Reaktionsführung durch Selbstorganisation (Phasenseparation) die Ausbildung einer dispersen Phase (i) bestehend aus
(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1,
wobei diese kautschukhaltige Phase (i) in einer nicht an die Kautschukpartikel gebundene und nicht in diese Kautschukpartikel eingeschlossene kautschukfreie Vinyl(co)polymerisat-Matrix (ii) bestehend aus Struktureinheiten gemäß B.1 dispergiert vorliegt.

Das kautschukfreie Vinyl(co)polymerisat (ii) lässt sich im Gegensatz zu den anderen Vinyl(co)polymerisat-Anteilen in der Komponente B durch geeignete Lösungsmittel wie beispielsweise Aceton herauslösen.

Die Größe der dispersen Phase (i) in den so hergestellten kautschukmodifizierten Vinyl(co)polymerisaten B wird über die Bedingungen der Reaktionsführung wie Temperatur und daraus resultierende Viskosität des Polymerisats sowie Scherung durch beispielsweise Rühren eingestellt.

Die mittlere Teilchengröße D50 ist der Durchmesser, oberhalb und unterhalb dessen jeweils 50 Gew.-% der Teilchen liegen. Er wird, soweit in der vorliegenden Erfindung nicht ausdrücklich anders beschrieben, für alle Komponenten mittels Ultrazentrifugenmessung (W. Scholtan, H. Lange, Kolloid, Z. und Z. Polymere 250 (1972), 782-796) bestimmt.

Die Monomere B.1 sind vorzugsweise Gemische bestehend aus
B.1.1 60 bis 85 Gew.-Teilen, besonders bevorzugt 65 bis 80 Gew.-Teilen, weiter bevorzugt 70 bis 78 Gew.-Teilen, jeweils bezogen auf die Summe aus B.1.1 und B.1.2, Styrol und
B.1.2 15 bis 40 Gew.-Teilen, besonders bevorzugt 20 bis 35 Gew.-Teilen, weiter bevorzugt 22 bis 30 Gew.-Teilen, jeweils bezogen auf die Summe aus B.1.1 und B.1.2, Acrylnitril
sowie optional B.1.3 0-10 Gew.-Teilen, bevorzugt 0-7 Gew.-Teilen, weiter bevorzugt 0-5 Gew.-Teilen Methylmethacrylat oder n-Butylacrylat, jeweils bezogen auf 100 Gew.-Teile als Summe von B.1.1 und B.1.2.

In einer weiteren bevorzugten Ausführungsform handelt es sich bei den Monomeren B.1 um ein Gemisch aus 22 bis 26 Gew.-Teilen Acrylnitril und 74 bis 78 Gew.-Teilen Styrol, welches optional bis zu 10 Gew.-Teilen, besonders bevorzugt bis zu 5 Gew.-Teilen an n-Butylacrylat oder Methylmethacrylat enthalten kann, wobei die Summe der Gewichtteile an Styrol und Acrylnitril 100 Gew.-Teile ergeben.

Besonders bevorzugt ist B.1 frei von B.1.3, wobei bezüglich B.1.1 und B.1.2 die oben genannten bevorzugten Bereiche gelten.

Bevorzugte Pfropfgrundlagen B.2 sind Dienkautschuke enthaltend Butadien, oder Gemische von Dienkautschuken enthaltend Butadien oder Copolymerisate von Dienkautschuken enthaltend Butadien oder deren Gemische mit weiteren copolymerisierbaren Monomeren (z.B. gemäß B.1.1 und B.1.2).

Besonders bevorzugt als Pfropfgrundlage B.2 ist reiner Polybutadienkautschuk. In einer weiteren bevorzugten Ausführungsform handelt es sich bei B.2 um Styrol-Butadien-Blockcopolymer-Kautschuk.

Die Komponente B weist bevorzugt einen Polybutadiengehalt von 5 bis 18 Gew.-%, weiter bevorzugt von 7 bis 15 Gew.-%, insbesondere von 8 bis 13 Gew.-% auf.

Besonders bevorzugte kautschukmodifizierte Vinyl(co)polymerisate gemäß Komponente B sind Masse-ABS-Polymerisate wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Das nicht an die Kautschukgrundlage(n) B.2 chemisch gebundene und nicht in den Kautschukpartikeln eingeschlossene Vinyl(co)polymerisat (ii) kann wie zuvor dargestellt herstellungsbedingt bei der Polymerisation der Pfropfpolymerisate B entstehen. Ebenso ist es möglich, dass ein Teil dieses nicht an die Kautschukgrundlage(n) B.2 chemisch gebundene und nicht in den Kautschukpartikeln eingeschlossene Vinyl(co)polymerisats (ii) im kautschukmodifizierten Vinyl(co)polymerisat gemäß Komponente B herstellungsbedingt bei dessen Herstellung im Masse-Polymerisationsverfahren entsteht und ein anderer Teil separat polymerisiert und der Komponente B als Bestandteil der Komponente B zugesetzt wird. Der Anteil des Vinyl(co)polymerisats (ii), unabhängig von dessen Ursprung, gemessen als in Aceton löslicher Anteil, beträgt in der Komponente B, bezogen auf die Komponente B, bevorzugt mindestens 50 Gew.-%, besonders bevorzugt mindestens 60 Gew-%, weiter bevorzugt mindestens 70 Gew.-%.

Dieses Vinyl(co)polymerisat (ii) weist in den kautschukmodifizierten Vinyl(co)polymerisaten gemäß Komponente B ein gewichtgemitteltes Molekulargewicht M_{w} von 70 bis 250 kg/mol, bevorzugt von 130 bis 200 kg/mol, insbesondere von 150 bis 180 kg/mol auf.

Das gewichtsgemittelte Molekulargewicht M_{w} des Vinyl(co)polymerisats (ii) in Komponente B wird im Rahmen der vorliegenden Erfindung per Gelpermeationschromatographie (GPC) in Tetrahydrofuran gegen Polystyrol als Standard gemessen.

Die Komponente B ist bevorzugt frei von Alkali-, Erdalkali-, Ammonium- oder PhosphoniumSalzen von gesättigten Fettsäuren mit 8 bis 22 Kohlenstoffatomen, Harzsäuren, Alkyl- und Alkylarylsulfonsäuren und Fettalkoholsulfaten.

Die Komponente B enthält bevorzugt weniger als 100 ppm, besonders bevorzugt weniger als 50 ppm, ganz besonders bevorzugt weniger als 20 ppm Ionen von Alkalimetallen und Erdalkalimetallen.

Als Komponente B geeignete kautschukmodifizierte Vinyl(co)polymerisate sind beispielsweise Magnum^{™} 3404, Magnum^{™} 3504 und Magnum^{™} 3904 der Firma Trinseo S.A. (Luxemburg).

### Komponente C

Als Komponente C können optional ein oder mehrere Vertreter ausgewählt aus der Gruppe bestehend aus Polymeradditiven und polymeren Blendpartnern enthalten sein.

Die Polymeradditive bzw. polymeren Blendpartner sind bevorzugt ausgewählt aus der Gruppe bestehend aus Gleit- und Entformungsmitteln, Stabilisatoren, Farbmitteln, Verträglichkeitsvermittlern, weiteren von Komponente B verschiedenen Schlagzähigkeitsmodifikatoren, weiteren von den Komponenten A und B verschiedenen polymeren Bestandteilen (beispielsweise funktionelle Blendpartner oder Pfropfpolymerisate mit Kern-Schale-Struktur hergestellt im Emulsions-Polymerisationsverfahren) sowie Füll- und Verstärkungsstoffen.

In bevorzugter Ausführungsform sind in Komponente C keine Füll- oder Verstärkungsstoffe enthalten. Weiter bevorzugt sind keine Farbmittel enthalten. Weiter bevorzugt sind keine polymeren Blendpartner enthalten. Weiter bevorzugt sind keine polymeren Komponenten enthalten. In besonders bevorzugter Ausführungsform sind weder Füll- oder Verstärkungsstoffe, Farbmittel noch polymere Blendpartner enthalten. Am stärksten bevorzugt sind weder Füll- oder Verstärkungsstoffe, Farbmittel noch polymere Komponenten enthalten.

In bevorzugter Ausführungsform wird als Komponente C mindestens ein Polymeradditiv ausgewählt aus der Gruppe bestehend aus Gleit- und Entformungsmitteln und Stabilisatoren eingesetzt.

In bevorzugter Ausführungsform wird als Stabilisator mindestens ein Vertreter ausgewählt aus der Gruppe bestehend aus sterisch gehinderten Phenolen, organischen Phosphiten, und organischen oder anorganischen Brönstedt-Säuren eingesetzt.

In bevorzugter Ausführungsform wird als Stabilisator mindestens ein Vertreter ausgewählt aus der Gruppe bestehend aus sterisch gehinderten Phenolen, organischen Phosphiten, und organischen oder anorganischen Brönstedt-Säuren eingesetzt.

Als Gleit-und Entformungsmittel werden in bevorzugter Ausführungsform Fettsäureester, besonders bevorzugt Fettsäureester des Pentaerythrits oder Glycerins, eingesetzt.

In einer besonders bevorzugten Ausführungsform wird als Komponente C mindestens ein Polymeradditiv ausgewählt aus der Gruppe bestehend aus C8-C22-Fettsäureester des Pentaerythrits, C8-C22-Fettsäureester des Glycerins, Tris(2,4-di-tert.-butyl-phenyl)-phosphit, 2,6-Di-tert.-butyl-4-(octadecanoxycarbonylethyl)phenol, Tetrakis(2,4-di-tert-butylphenyl)-4,4-biphenyldiphosphonit, Bis(2,4-di-tert-butylphenyl)-pentaerythritoldiphosphit und Triethylenglykol-bis [3 -(3 -tert-butyl-4-hydroxy-5 -methylphenyl)propionat] eingesetzt.

In einer weiteren Ausführungsform enthält die Komponente C kein kautschukmodifiziertes Vinyl(co)polymerisat hergestellt durch Emulsionspolymerisation.

### Herstellung der Formmassen der Trägerschicht

Aus den erfindungsgemäßen Komponenten A, B und C werden thermoplastische Formmassen hergestellt.

Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C, ganz besonders bevorzugt bei 260°C bis 290°C in üblichen Aggregaten wie beispielsweise Innenknetern, Extrudern und Doppelwellenschnecken schmelzcompoundiert und schmelzextrudiert.

Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

### Metallschicht

Bei der Metallschicht (II) handelt es sich um eine bevorzugt mehrlagige Metallschicht, die bevorzugt in einem Galvanisierungsprozess aufgebracht wird.

Die Metallschicht weist mindestens eine Aussparung auf. Die mindestens eine Aussparung kann beispielsweise die Form eines Symbols, eines Musters, eines Lochs, einer Linie oder eines Zeichens aufweisen. Ebenso ist es möglich, dass es sich um punktförmige Aussparungen handelt, die in Form von mindestens einem Symbol, einem Muster, einem Loch, einer Linie oder einem Zeichen angeordnet sind.

Bevorzugt besteht die mehrlagige Metallschicht aus mindestens drei, weiter bevorzugt mindestens vier mikroskopisch und/oder chemisch-analytisch differenzierbaren Metalllagen.

Die Dicke der bevorzugt mehrlagigen Metallschicht beträgt 5 bis 200 µm, bevorzugt 10 bis 60 µm, besonders bevorzugt 30 bis 50 µm.

In einer ersten Ausführungsform besteht die mehrlagige Metallschicht aus drei bevorzugt mikroskopisch und chemisch-analytisch differenzierbaren Metalllagen, nämlich, ausgehend von der Trägerschicht (I),
(i) aus einer ersten Lage aus Kupfer,
(ii) einer zweiten Lage aus Nickel,
(iii) und einer dritten Lage aus einem Metall mit einer hohen Beständigkeit gegen Umwelteinflüssen, beispielsweise und bevorzugt aus Chrom.

In einer zweiten, bevorzugten Ausführungsform besteht die mehrlagige Metallschicht aus vier bevorzugt mikroskopisch und chemisch-analytisch differenzierbaren Metalllagen, nämlich, ausgehend von der Trägerschicht (I),
(i) aus einer ersten Lage aus Nickel,
(ii) einer zweiten Lage aus Kupfer,
(iii) einer dritten Lage aus Nickel,
(iv) und einer vierten Lage aus einem Metall mit einer hohen Beständigkeit gegen Umwelteinflüssen, beispielsweise und bevorzugt aus Chrom.

Die notwendigen Dicken der einzelnen Metalllagen und damit die Dicke der gesamten Metallschicht im erfindungsgemäßen Mehrschichtkörper ergeben sich aus den Anforderungen an die mechanischen Eigenschaften, Beständigkeit gegenüber Umwelteinflüssen, die Wärmeformbeständigkeit und weiteren notwendigen Eigenschaften des Bauteils.

Die Kupfermetalllage weist bevorzugt eine Dicke von 10 bis 50 µm, besonders bevorzugt von 15 bis 30 µm, ganz besonders bevorzugt von 20 bis 30 µm auf.

Die ausgehend von der Trägerschicht (I) der Kupferschicht folgende Nickelmetallschicht ist in bevorzugter Ausführungsform maximal halb so dick wie die darunter liegende Kupfermetallschicht.

Die oberste Metalllage aus einem Metall mit einer hohen Beständigkeit gegen Umwelteinflüssen, bevorzugt aus Chrom, weist bevorzugt eine Dicke von 100 nm bis 3 µm, besonders bevorzugt von 200 nm bis 1,5 µm auf.

Für solche Bauteilen, in denen unmittelbar an der Trägerschicht (I) eine Nickelmetallschicht grenzt, weist diese gewöhnlich und bevorzugt eine Dicke von 500 nm bis 5 µm, besonders bevorzugt von 1 µm bis 2 µm auf.

Die Metallschicht kann auf der der Trägerschicht abgewandten Seite mit einem Beschichtungsmittel beschichtet sein. Eine Beschichtung soll üblicherweise einen mechanischen Schutz gegen Abrieb und Verkratzung und/oder einen Schutz gegen Bewitterungseinflüsse, d.h. Beregnung, Temperatur und UV-Strahlung, bieten. Mit einer Beschichtung kann auch eine bestimmte Oberflächenhaptik oder -optik erreicht werden, Geeignete Beschichtungen sind beispielsweise thermisch härtende Beschichtungssysteme auf Basis eines Polysiloxanlackes, die sowohl einschichtig als auch mehrschichtig (mit einer lediglich haftvermittelnden Primerschicht zwischen Substrat und Polysiloxandecklack) sein können.

Ebenso können UV-härtende Beschichtungssysteme, z.B. auf Acrylat-, Urethanacrylat oder Acrylsilanbasis, die gegebenenfalls Füllstoffe zur Verbesserung der Kratzfestigkeit beinhalten, eingesetzt werden.

### Herstellung der Mehrschichtkörper

Im Folgenden wird ein bevorzugtes Verfahren zur Herstellung der erfindungsgemäßen Mehrschichtkörper beschrieben:
In einem ersten Schritt (1) wird die Trägerschicht (I) aus einer thermoplastischen Zusammensetzung wie oben beschrieben geformt, wobei bevorzugt ein Extrusions-, Blasform-, Thermoform- oder Spritzgussverfahren, besonders bevorzugt ein Spritzgussverfahren zur Formgebung bei der Herstellung dieses Trägers zum Einsatz kommt.

In einem nachgeschalteten Verfahrensschritt wird die Trägerschicht (I) in einem für Acrylnitril-Butadien-Styrol (ABS)-Copolymere und deren Blends mit Polycarbonat etablierten Galvanisierungsverfahren galvanisiert.

Die Verfahrensparameter im Verfahrensschritt (1) sind bevorzugt so zu wählen, dass das im Galvanisierungsprozess eingesetzte Trägerbauteil möglichst spannungsarm ist. Hierfür ist es bei Einsatz von Spritzgussverfahren zur Formgebung vorteilhaft, die Einspritzgeschwindigkeit sowie den Spritz- und Nachdruck möglichst gering und die Werkzeugtemperatur möglichst hoch zu wählen. Die konkreten Bedingungen ergeben sich aus der Werkzeuggeometrie und dem Werkzeuganguss. Vorteilhaft sind spezifische Spritzdrücke von nicht mehr als 600 bar. Der spezifische Nachdruck startet bevorzugt beim Wert des spezifischen Spritzdrucks und wird dann bevorzugt abklingend eingestellt.

Die Werkzeugtemperatur liegt bevorzugt im Bereich 80°C bis 140°C, besonders bevorzugt im Bereich 100 bis 130°C.

Im Verfahrensschritt (1) erweist es sich weiterhin als besonders vorteilhaft und daher bevorzugt, ein variothermes Spritzgussverfahren zum Einsatz zu bringen, in dem das Spritzgusswerkzeug zunächst auf eine Temperatur oberhalb der Glasübergangstemperatur der Polycarbonat-Komponente A), bevorzugt von mindestens 150°C, besonders bevorzugt von mindestens 160°C temperiert wird, diese Temperatur nach Einspritzen der Polycarbonat-Zusammensetzung in das Werkzeug für die Dauer der Nachdruckzeit gehalten und erst danach das Werkzeug auf eine Temperatur unterhalb der Glasübergangstemperatur der Polycarbonat-Komponente A), bevorzugt im Bereich 80°C bis 140°C, besonders bevorzugt im Bereich 100 bis 130°C, abgekühlt, dadurch verfestigt und schließlich entformt wird. Durch derartige Verfahren kann eine weitere Verbesserung der praktischen Wärmeformbeständigkeit der galvanisierten Bauteile gegenüber Standard-Spritzgussverfahren realisiert werden.

Der im Verfahrensschritt (1) hergestellte Trägerschicht (I) kann grundsätzlich eine Platte ein Profil oder ein dreidimensionales Bauteil beliebiger Form sein. Weiterhin kann die im Verfahrensschritt (1) hergestellte Trägerschicht (I) auch eine Folie sein. Derartige als Trägerschicht (I) geeignete Folien werden bevorzugt in einem Extrusionsprozess hergestellt.

In dem speziellen Fall, dass die Trägerschicht (I) in einem Extrusions- oder Blasformverfahren hergestellt wird, insbesondere in dem speziellen Fall, dass es sich bei der Trägerschicht (I) um eine extrudierte Folie oder eine optional thermogeformte Extrusionsplatte handelt, kommt zur Herstellung der Trägerschicht (I) bevorzugt eine thermoplastische Formmasse enthaltend als Komponente A ein verzweigtes Polycarbonat zum Einsatz.

Nach der Herstellung im Verfahrensschritt (1) wird die Trägerschicht (I) bevorzugt so lange zwischengelagert, bis der Nachschwindungsprozess beendet ist. Dazu werden üblicherweise 10 bis 48 h benötigt. Durch diese Zwischenlagerung werden noch im Kunststoffteil befindliche Spannungen weiter reduziert.

In einem zweiten optionalen Verfahrensschritt (2) wird zumindest ein Teil der der Sichtseite des Mehrschichtkörpers abgewandten Oberfläche des Kunststoffträgers sowie optional ein Teil der Sichtseitenoberfläche des Kunststoffträgers mit einer galvanostabilen Schicht, bevorzugt einem Lack, beaufschlagt, welche im späteren Verfahrensschritt (3a) die chemische, elektrochemische oder physikalische Metallabscheidung und somit im Verfahrensschritt (3c) die Galvanisierung in diesem Bereich des Kunststoffträgers lokal verhindert.

Der dritte Verfahrensschritt (3) der elektrochemische Abscheidung einer mehrlagigen Metallschicht auf dem im Schritt (2) nicht mit einer galvanostabilen Schicht abgedeckten Teil der Oberflächen des Kunststoffträgers (Galvanisierungsprozess) umfasst die folgende Einzelschritte:
(3a) Erzeugung einer dünnschichtigen Metallschicht, bevorzugt einer Schicht aus Palladium, Kupfer oder Nickel, auf dem Kunststoffträger in einem chemischen, elektrochemischen oder physikalischen Verfahren, bevorzugt ausgewählt aus Abscheiden aus kolloidaler Lösung, Direktmetallisierung oder Bedampfung,
(3b) optional partielles Abtragen der im Verfahrensschritt (3a) erzeugten dünnschichtigen Metallschicht zur Erzeugung von nicht mit der Metalldünnschicht bedeckten Bereichen auf dem Kunststoffträger, bevorzugt durch ein Verfahren ausgewählt aus Ätzung oder Laserablation,
(3c) galvanisches Fertigstellen der mehrlagigen metallischen Oberflächenbeschichtung umfassend mindestens einen elektrochemischen Metallabscheidungsschritt, wobei die im Verfahrensschritt (3b) erzeugten nicht mit der Metalldünnschicht bedeckten Bereiche auf dem Kunststoffträger nicht galvanisiert werden.

In einem optionalen vierten Verfahrensschritt (4) wird die auf die Kunststoffträgeroberfläche aufgebrachte Metallschicht durch mechanische, chemische und/oder physikalische Verfahren unter Ausbildung von Durchbrechungen der Metallschicht und lokaler Freilegung der Kunststoffträgeroberfläche wieder partiell entfernt.

In dem erfindungsgemäßen Verfahren zur Herstellung der erfindungsgemäßen Mehrschichtkörper kommt mindestens einer der optionalen Verfahrensschritte (2), (3b) und (4) zur Anwendung. Dadurch resultiert mindestens eine Aussparung in der bevorzugt mehrlagigen Metallschicht auf der Sichtseite des Mehrschichtkörpers. Sofern auch die der Sichtseite abgewandte Seite des Mehrschichtkörpers im Verfahrensschritt (3) mit einer Metallschicht beaufschlagt wird, resultiert auch auf dieser der Sichtseite abgewandten Seite mindestens eine Aussparung.

In dem Fall, dass sowohl die Sichtseite als auch die der Sichtseite abgewandte Seite des Mehrschichtkörpers im Verfahrensschritt (3) mit einer Metallschicht elektrochemisch beaufschlagt werden, werden die durch mindestens einen der optionalen Verfahrensschritte (2), (3b) und (4) in beiden Seiten des Mehrschichtkörpers eingebrachten mindestens eine Aussparungen bevorzugt in direkt gegenüberliegenden Bereichen des Kunststoffträgers I realisiert.

Bevorzugt wird nur die Sichtseite des Mehrschichtkörper mit einer Metallschicht versehen.

Bevorzugt ist ein Verfahren, in dem der Verfahrensschritt 3a) die folgenden Einzelschritte umfasst:
(3a-1) das Beizen des im Verfahrensschritt (1) hergestellten Kunststoffträgers, beispielsweise und bevorzugt mit Chromschwefelsäure, wobei in bevorzugter Ausführungsform in diesem Verfahrensschritt ein Benetzungshilfsmittel (z.B. Udique^{®} Wetting Agent BL2030 des Herstellers Entone) als Prozesshilfsmittel zum Einsatz kommt, welches die Oberflächenspannung zwischen Kunststoffträger und Beizmittel reduziert, gefolgt von einer chemischen Reduktion der Chromschwefelsäure durch ein Reduktionsmittel wie beispielsweise Eisen-(II)-chlorid und nachfolgendem gründlichen Spülen mit Wasser zur effektiven Entfernung von Chromresten,
(3a-2) die Aktivierung des so vorbehandelten Kunststoffträgers durch Adsorption eines Palladium-Kolloids, bevorzugt ein Palladium-Kolloid mit einer Zinnchlorid Hülle, auf der Trägeroberfläche und
(3a-3) die Generierung von Palladium-Keimen zur späteren Abscheidung von chemisch Nickel oder chemisch Kupfer auf der Kunststoffträgeroberfläche durch Zerstörung der Hülle des adsorbierten Palladium-Kolloids durch Behandlung mit einer verdünnten Brönstedt-Säure.

Weiter bevorzugt ist ein solches Verfahren, in dem der Verfahrensschritt 3c) die folgenden Einzelschritte umfasst:
(3c-1) Abscheidung von chemisch Nickel oder chemisch Kupfer aus einer Nickel-(II)-oder einer Kupfer-(II)-Salzlösung unter Verwendung eines chemischen Reduktionsmittels, wie beispielsweise ein Dihydrogenphosphitsalz,
(3c-2) elektrochemische Aufbringung einer Kupfermetallschicht,
(3c-3) elektrochemische Aufbringung einer Nickelmetallschicht und
(3c-4) elektrochemische Aufbringung einer weiteren Metallschicht mit einer hohen Beständigkeit gegen Umwelteinflüsse, beispielsweise und bevorzugt einer Chrommetallschicht.

In einer weiteren bevorzugten Ausführungsform des Galvanisierungsverfahrens wird der Kunststoffträger aus dem Verfahrensschritt (3a-1) vor dem Verfahrensschritt (3a-2) mit einem sogenannten "Conditioner" behandelt, der als Prozesshilfsmittel die Adsorption des Palladium-Kolloids im Verfahrensschritt (3a-2) verbessert. Dabei handelt es sich um Substanzen bevorzugt ausgewählt aus der Gruppe der Amine, bevorzugt um Cyclohexandiamin. Der "Conditioner" wird bevorzugt als wässrige Lösung eingesetzt. Vor oder nach der Behandlung mit dem "Conditioner" kann optional eine zusätzliche Behandlung des Kunststoffträgers mit einer wässrigen Lösung einer Brönstedt-Säure, bevorzugt einer Salzsäurelösung erfolgen.

Das Ausmaß der Palladium-Adsorption wird unter anderem durch die Natur des Palladium-Kolloids und die Bedingungen im Aktivierungschritt (3a-2), insbesondere die Aktivierungsdauer, die Temperatur und die eingesetzte Konzentration des Palladium-Kolloids bestimmt.

Die Bedingungen im Aktivierungsschritt (3a-2) und ggf. in vorgeschalteten Konditionierungsschritten wie zuvor beschrieben werden bevorzugt so gewählt, dass eine Belegung der Kunststoffträgeroberfläche nach dem Verfahrensschritt (3a-3) von mindestens 4 mg Palladium/m², bevorzugt von mindestens 5 mg Palladium/m² resultiert. Die nach dem Verfahrensschritt (3a-3) abgeschiedene Palladiumbelegung liegt bevorzugt bei maximal 50 mg Palladium/m², besonders bevorzugt bei maximal 30 mg Palladium/m².

Im Verfahrensschritt (3c-1) wird eine geschlossene chemisch Nickel oder chemisch Kupferschicht, bevorzugt mit einer Dicke von 500 nm bis 5 µm, besonders bevorzugt von 1 µm bis 2 µm aufgetragen.

In einer bevorzugten Ausführungsform des Galvanisierungsverfahrens wird im Verfahrensschritt (3c-2) zunächst in einem ersten Schritt (3c-2-1) eine dünne Verstärkungsschicht aus Nickel oder Kupfer elektrochemisch aufgebracht und danach in einem zweiten Schritt (3c-2-2) eine dickere Hochglanz-Schicht aus Kupfermetall elektrochemisch aufgebracht, wobei im Verfahrensschritt (3c-2-2) eine höhere Stromdichte zum Einsatz kommt als im Verfahrensschritt (3c-2-1). In besonders bevorzugter Ausführungsform ist die Stromdichte im Verfahrensschritt (3c-2-2) um mindestens 30%, besonders bevorzugt um mindestens 50% höher als die Stromdichte im Verfahrensschritt (3c-2-1). Durch diese bevorzugte Ausführungsform kann die Zeit, die zur Aufbringung der Hochglanz-Kupfermetallschicht notwendig ist, reduziert werden.

Durch die Auswahl der Verfahrensparameter im Schritt (3c-3) kann die Oberflächenerscheinung der erfindungsgemäßen Bauteile bzgl. ihres Glanzes von hochglänzend bis matt variiert werden.

Bevorzugt sind die erfindungsgemäßen Bauteile hochglänzend, d.h. sie weisen einen Glanzgrad von größer 90, bevorzugt größer 95, besonders bevorzugt von größer 98 bei einem Betrachtungswinkel von 60° auf. Unter dem Glanzgrad ist im Rahmen der vorliegenden Anmeldung der nach ISO 2813 in der Version von 2015 bestimmte Wert zu verstehen.

Sofern es sich bei der Trägerschicht (I) um einen spritzgegossenen Kunststoffträger, eine optional thermogeformte Extrusionsplatte oder ein Extrusionsprofil handelt, weist diese Trägerschicht (I) bevorzugt eine Dicke von 0,5 bis 5 mm, besonders bevorzugt von 1,5 bis 3,5 mm, besonders bevorzugt von 1,7 bis 3,0 mm auf. Diese Angabe ist so zu verstehen, dass die Trägerschicht (I) eine Dicke in diesen Bereichen an jeder Stelle ihrer Ausdehnung aufweist, wobei in den zu durchleuchtenden Bereichen bevorzugt Trägerschichtdicken von maximal 3,0 mm, weiter bevorzugt maximal 2,5 mm, besonders bevorzugt maximal 2,2 mm zum Einsatz kommen. Dabei weist die Schicht, nicht zwingend über die gesamte Fläche dieselbe Dicke auf, sondern kann auch unterschiedliche Dicken aufweisen, beispielsweise durch Ausbildung von Verstärkungsrippen, aufgrund der Bauteilform, aufgrund von Befestigungsstrukturen etc..

In einer speziellen Ausführungsform, in der die Trägerschicht (I) in dem erfindungsgemäßen Mehrschichtkörper eine extrudierte Folie ist, weist diese Folie bevorzugt eine Dicke von 0,1 bis 1 mm, weiter bevorzugt 0,2 bis 0,7 mm, besonders bevorzugt 0,3 bis 0,6 mm auf.

Derartige Folien eignen sich zum Hinterspritzen der der Sichtseite des Mehrschichtkörpers abgewandten Seite des Trägerschicht (I) mit einer thermoplastischen Formmasse mit hoher Lichttransmission. Das Aufbringen der Metallschicht auf die der Sichtseite des Mehrschichtkörpers zugewandten Seite der Trägerschicht (I) in einem Galvanisierungsverfahren wie zuvor beschrieben kann sowohl vor als auch nach dem Hinterspritzen der Trägerschichtfolie (I), bevorzugt nach dem Hinterspritzen mit der thermoplastischen Formmasse mit hoher Lichttransmission erfolgen.

In diesem Fall resultiert ein mindestens dreischichtiger Mehrschichtkörper umfassend in dieser Reihenfolge
- eine bevorzugt mehrlagige Metallschicht (II),
- die Trägerschicht (I) und
- die Hinterspritzungsschicht (III) aus der thermoplastischen Formmasse mit hoher Lichttransmission.

Die Hinterspritzungsschicht (III) aus der thermoplastischen Formmasse mit hoher Lichttransmission weist bevorzugt eine Dicke von 0,5 bis 5 mm, besonders bevorzugt von 1,5 bis 3,5 mm, besonders bevorzugt von 1,7 bis 3,0 mm auf, wobei diese Angaben genauso zu verstehen sind wie zuvor beschrieben.

Als thermoplastische Formmasse mit hoher Lichttransmission, die sich zur Ausbildung der Hinterspritzungsschicht (III) eignen, kommen bevorzugt Formmassen zum Einsatz, welche aus einer aromatisches Polycarbonat enthaltenden Zusammensetzung hergestellt werden. Besonders bevorzugt werden die zur Ausbildung der Hinterspritzungsschicht (III) geeigneten thermoplastischen Formmassen hergestellt aus Zusammensetzungen enthaltend mindestens ein aromatisches Polycarbonat und mindestens einen Vertreter ausgewählt aus der Gruppe bestehend aus Entformungsmitteln, Stabilisatoren, Fließhilfsmitteln, Farbstoffen, Pigmenten und Additiven, welche die Lichtstreuung des Polycarbonats erhöhen. Der Gehalt an Entformungsmitteln, Stabilisatoren, Fließhilfsmitteln, Farbstoffen, Pigmenten und Additiven, welche die Lichtstreuung des Polycarbonats erhöhen, beträgt in diesen Zusammensetzungen in Summe bevorzugt 0,05 bis 10 Gew.-%, besonders bevorzugt 0,1 bis 5 Gew.-%, am meisten bevorzugt 0,2 bis 3 Gew.-%.

In bevorzugter Ausführungsform weist die thermoplastische Formmasse, aus der die Hinterspritzungsschicht (III) hergestellt wird, eine so hohe Lichttransmission auf, dass die Hinterspritzungsschicht (III) in ihrer tatsächlichen Dicke bei mindestens einer Wellenlänge im Wellenlängenbereich des Spektrums von 380 bis 780 nm einen Transmissionsgrad von mindestens 40%, weiter bevorzugt mindestens 50%, besonders bevorzugt mindesten 60% und am meisten bevorzugt von mindestens 70% aufweist, wobei der Transmissionsgrad aus dem Transmissionsspektrum ermittelt wird, welches gemäß der Vorgaben in der DIN/ISO 13468-2 in der Version von 2006 gemessen wird.

Nachfolgend werden weitere Ausführungsformen vorliegenden Erfindung beschrieben:
1. Mehrschichtkörper,
   umfassend
   (I) eine Trägerschicht aus einer thermoplastischen Formmasse enthaltend
      A) mindestens einen Vertreter ausgewählt aus der Gruppe bestehend aus aromatischem Polycarbonat und aromatischen Polyestercarbonat,
      B) kautschukmodifiziertes Vinyl(co)polymerisat aus
         B.1) 80 bis 95 Gew.-%, bezogen auf das kautschukmodifizierte Vinyl(co)polymerisat B, Struktureinheiten abgeleitet von wenigstens einem Vinylmonomeren und
         B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
            wobei das kautschukmodifizierte Vinyl(co)polymerisat B
               (i) eine disperse Phase bestehend aus
                  (i.1) mit Vinyl(co)polymerisat aus Struktureinheiten gemäß B.1 gepfropften Kautschukpartikeln und
                  (i.2) in den Kautschukpartikeln als separierte disperse Phase eingeschlossenes Vinyl(co)polymerisat ebenfalls aus Struktureinheiten gemäß B.1
                     und
               (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
            enthält,
            wobei die disperse Phase gemäß (i) einen mittleren Durchmesser D50 gemessen per Ultrazentrifugation von 0,7 bis 2,0 µm aufweist,
      C) optional mindestens eine weitere Komponente ausgewählt aus Polymeradditiven und polymeren Blendpartnern,
      wobei die thermoplastische Formmasse weniger als 2 Gew.-% an von Komponente B) verschiedenen, kautschukbasierten Pfropfpolymeren enthält und
      wobei die thermoplastische Formmasse einen Kautschukgehalt von mindestens 2,0 Gew.-% aufweist,
   (II) eine Metallschicht, bevorzugt eine mehrlagige Metallschicht, die mindestens eine Aussparung aufweist.
2. Mehrschichtkörper gemäß Ausführungsform 1, wobei die mindestens eine Aussparung die Form von mindestens einem Symbols, eines Musters, eines Lochs, einer Linie oder eines Zeichens aufweist oder es sich um punktförmige Aussparungen handelt, die in Form von mindestens einem Symbol, einem Muster, einem Loch, einer Linie oder einem Zeichen angeordnet sind.
3. Mehrschichtkörper gemäß einer der vorhergehenden Ausführungsformen, wobei die Dicke der Metallschicht 5 bis 200 µm beträgt
4. Mehrschichtkörper gemäß einer der vorhergehenden Ausführungsformen, wobei die Dicke der Metallschicht 10 bis 60 µm beträgt.
5. Mehrschichtkörper gemäß einer der vorhergehenden Ausführungsformen, wobei die Dicke der Metallschicht 30 bis 50 µm beträgt.
6. Mehrschichtkörper gemäß einer der vorhergehenden Ausführungsformen, wobei die Metallschicht eine mehrlagige Metallschicht bestehend aus mindestens drei Lagen ist.
7. Mehrschichtkörper gemäß einer der vorhergehenden Ausführungsformen, wobei die Metallschicht aus drei Metalllagen besteht, ausgehend von der Trägerschicht (I),
   (i) aus einer ersten Lage aus Kupfer,
   (ii) einer zweiten Lage aus Nickel,
   (iii) und einer dritten Lage aus einem Metall mit einer hohen Beständigkeit gegen Umwelteinflüssen.
8. Mehrschichtkörper gemäß einer der vorhergehenden Ausführungsformen, wobei die Metallschicht aus vier Metalllagen besteht, ausgehend von der Trägerschicht (I),
   (i) aus einer ersten Lage aus Nickel,
   (ii) einer zweiten Lage aus Kupfer,
   (iii) einer dritten Lage aus Nickel,
   (iv) und einer vierten Lage aus einem Metall mit einer hohen Beständigkeit gegen Umwelteinflüssen.
9. Mehrschichtkörper gemäß einer der vorhergehenden Ausführungsformen 7 oder 8, wobei das Metall mit einer hohen Beständigkeit gegen Umwelteinflüsse Chrom ist.
10. Mehrschichtkörper gemäß Ausführungsform 9, wobei die Lage aus Chrom eine Dicke von 100 nm bis 3 µm aufweist.
11. Mehrschichtkörper gemäß einer der vorhergehenden Ausführungsformen 7 bis 10, wobei die Kupfermetalllage eine Dicke von 10 bis 50 µm aufweist.
12. Mehrschichtkörper gemäß einer der Ausführungsformen 7 bis 11, wobei die ausgehend von der Trägerschicht (I) der Kupferschicht folgende Nickelmetallschicht maximal halb so dick ist wie die darunter liegende Kupfermetallschicht.
13. Mehrschichtkörper gemäß einer der vorhergehenden Ausführungsformen, wobei es sich bei der Trägerschicht (I) um einen Spritzgusskörper, eine optional thermogeformte Extrusionsplatte oder ein Extrusionsprofil handelt und die Dicke der Trägerschicht (I) im Bereich 0,5 bis 5 mm liegt.
14. Mehrschichtkörper gemäß einer der vorhergehenden Ausführungsformen, wobei die Trägerschicht (I) im zu durchleuchtenden Bereich eine Dicke von 1,5 bis 3,7 mm aufweist.
15. Mehrschichtkörper gemäß einer der Ausführungsformen 1 bis 12, wobei es sich bei der Trägerschicht (I) um eine Folie mit einer Dicke von 0,1 bis 1 mm handelt.
16. Mehrschichtkörper gemäß Ausführungsform 15, wobei es sich bei der Trägerschicht (I) um eine Folie mit einer Dicke von 0,3 bis 0,6 mm handelt.
17. Mehrschichtkörper gemäß einer der vorhergehenden Ausführungsformen, wobei der Mehrschichtkörper aus mindestens drei Schichten besteht, umfassend in dieser Reihenfolge
   - eine bevorzugt mehrlagige Metallschicht (II),
   - die Trägerschicht (I) und
   - eine Hinterspritzungsschicht (III) aus einer thermoplastischen Formmasse, welche aus einer aromatisches Polycarbonat enthaltenden Zusammensetzung hergestellt ist.
18. Mehrschichtkörper gemäß Ausführungsform 17, wobei die Hinterspritzungsschicht (III) aus einer thermoplastischen Formmasse gebildet wird, die aus einer Zusammensetzung herstellt ist, enthaltend mindestens ein aromatisches Polycarbonat und mindestens einen Vertreter ausgewählt aus der Gruppe bestehend aus Entformungsmitteln, Stabilisatoren, Fließhilfsmitteln, Farbstoffen, Pigmenten und Additiven, welche die Lichtstreuung des Polycarbonats erhöhen.
19. Mehrschichtkörper gemäß Ausführungsform 18, wobei der Gehalt an Entformungsmitteln, Stabilisatoren, Fließhilfsmitteln, Farbstoffen, Pigmenten und Additiven, welche die Lichtstreuung des Polycarbonats erhöhen, in der Formmasse zur Herstellung der Hinterspritzungsschicht (III) bei 0,1 bis 5 Gew.-% liegt.
20. Mehrschichtkörper gemäß einer der vorhergehenden Ausführungsformen, wobei die Trägerschicht (I) in einem Extrusions- oder Blasformverfahren hergestellt wird und die Trägerschicht (I) aus einer thermoplastischen Formmasse besteht, welche als Komponente A ein verzweigtes Polycarbonat enthält.
21. Mehrschichtkörper gemäß einer der vorhergehenden Ausführungsformen, wobei die Trägerschicht
   30 bis 85 Gew.-%, der Komponente A, 14 bis 69 Gew.-% der Komponente B und 0,05 bis 20 Gew.-% der Komponente C enthält.
22. Mehrschichtkörper gemäß einer der vorhergehenden Ausführungsformen, wobei die Trägerschicht 50 bis 82 Gew.-%, der Komponente A, 17 bis 49 Gew.-% der Komponente B und 0,1 bis 10 Gew.-% der Komponente C enthält.
23. Mehrschichtkörper gemäß einer der vorhergehenden Ausführungsformen, wobei die Trägerschicht 58 bis 82 Gew.-%, der Komponente A, 17 bis 41 Gew.-% der Komponente B und 0,2 bis 5 Gew.-% der Komponente C enthält.
24. Mehrschichtkörper gemäß einer der vorhergehenden Ausführungsformen, wobei die Trägerschicht 65 bis 75 Gew.-%, der Komponente A, 24 bis 34 Gew.-% der Komponente B und 0,3 bis 2 Gew.-% der Komponente C enthält.
25. Mehrschichtkörper gemäß einer der vorhergehenden Ausführungsformen, wobei die Trägerschicht weniger als 1 Gew.-% an von Komponente B) verschiedenen, kautschukbasierten Pfropfpolymeren enthält.
26. Mehrschichtkörper gemäß einer der vorhergehenden Ausführungsformen, wobei die Trägerschicht keinerlei von Komponente B) verschiedenen, kautschukbasierten Pfropfpolymeren enthält.
27. Mehrschichtkörper gemäß einer der vorhergehenden Ausführungsformen, wobei die Trägerschicht einen Kautschukgehalt im Bereich von 2,0 bis 6 Gew.-% aufweist.
28. Mehrschichtkörper gemäß einer der vorhergehenden Ausführungsformen, wobei die Trägerschicht einen Kautschukgehalt im Bereich von 2,5 bis 5 Gew.-% aufweist.
29. Mehrschichtkörper gemäß einer der vorhergehenden Ausführungsformen, wobei die Trägerschicht einen Kautschukgehalt im Bereich von 2,6 bis 4,1 Gew.-% aufweist.
30. Mehrschichtkörper gemäß einer der vorhergehenden Ausführungsformen, wobei die Trägerschicht einen Kautschukgehalt im Bereich von 2,7 bis 3,3 Gew.-% aufweist.
31. Mehrschichtkörper gemäß einer der vorhergehenden Ausführungsformen, wobei die Komponente A der Trägerschicht ein aromatisches Polycarbonat basierend auf Bisphenol A ist.
32. Mehrschichtkörper gemäß einer der vorhergehenden Ausführungsformen, wobei die Komponente B) der Trägerschicht durch ein Massepolymerisationsverfahren hergestellt wird.
33. Mehrschichtkörper gemäß einer der vorhergehenden Ausführungsformen, wobei die Komponente B) weniger als in Summe 100 ppm Ionen von Alkalimetallen und Erdalkalimetallen enthält.
34. Mehrschichtkörper gemäß einer der vorhergehenden Ausführungsformen, wobei die Komponente B) weniger als in Summe 20 ppm Ionen von Alkalimetallen und Erdalkalimetallen enthält.
35. Mehrschichtkörper gemäß einer der vorhergehenden Ausführungsformen, wobei die Trägerschicht zu mindestens 80 Gew.-% aus den Komponenten A, B und C besteht.
36. Mehrschichtkörper gemäß einer der vorhergehenden Ausführungsformen, wobei die Trägerschicht zu mindestens 95 Gew.-% aus den Komponenten A, B und C besteht.
37. Mehrschichtkörper gemäß einer der vorhergehenden Ausführungsformen, wobei die Trägerschicht aus den Komponenten A, B und C besteht.
38. Verwendung einer thermoplastischen Formmasse enthaltend die Komponenten A, B und C wie in einer der vorhergehenden Ausführungsformen 1 und 21 bis 37 beschrieben
   als Trägerschicht in einem Mehrschichtkörper,
   wobei der Mehrschichtkörper folgende Komponenten umfasst:
      (I) die Trägerschicht,
      (II) eine Metallschicht, bevorzugt eine mehrlagige Metallschicht, die mindestens eine Aussparung aufweist.
39. Beleuchtungs- oder Anzeigeeinheit, umfassend
   a) einen Mehrschichtkörper gemäß einer der Ausführungsformen 1 bis 37,
   b) eine Lichtquelle, welche Licht mit mindestens einer Wellenlänge im Wellenlängenbereich des Spektrums von 380 bis 780 nm ausstrahlt,
   wobei die Lichtquelle b) so angeordnet ist, dass die Trägerschicht (I) des Mehrschichtkörpers a) von dem von der Lichtquelle b) abgestrahlten Licht durchstrahlt wird.
40. Beleuchtungs- oder Anzeigeeinheit gemäß Ausführungsform 39, wobei es sich bei der Lichtquelle um eine LED-Lichtquelle handelt.
41. Verfahren zur Herstellung eines Mehrschichtkörpers,
   umfassend die Schritte
   (1) Formen eines Kunststoffträgers aus einer thermoplastischen Formmasse enthaltend
      A) mindestens einen Vertreter ausgewählt aus der Gruppe bestehend aus aromatischem Polycarbonat und aromatischen Polyestercarbonat,
      B) kautschukmodifiziertes Vinyl(co)polymerisat aus
         B.1) 80 bis 95 Gew.-%, bezogen auf das kautschukmodifizierte Vinyl(co)polymerisat B, Struktureinheiten abgeleitet von wenigstens einem Vinylmonomeren und
         B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,

         wobei das kautschukmodifizierte Vinyl(co)polymerisat B
            (i) eine disperse Phase bestehend aus
               (i.1) mit Vinyl(co)polymerisat aus Struktureinheiten gemäß B.1 gepfropften Kautschukpartikeln
                  und
               (i.2) in den Kautschukpartikeln als separierte disperse Phase eingeschlossenes Vinyl(co)polymerisat ebenfalls aus Struktureinheiten gemäß B.1
                  und
            (ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
         enthält,
         wobei die disperse Phase gemäß (i) einen mittleren Durchmesser D50 gemessen per Ultrazentrifugation von 0,7 bis 2,0 µm aufweist,
      C) optional mindestens eine weitere Komponente ausgewählt aus Polymeradditiven und polymeren Blendpartnern.
      wobei die thermoplastische Formmasse weniger als 2 Gew.-%, an von Komponente B) verschiedenen, kautschukbasierten Pfropfpolymeren enthält und
      wobei die thermoplastische Formmasse einen Kautschukgehalt von mindestens 2,0 Gew.-% aufweist,
   (2) optional Abdeckung zumindest eines Teils der der Sichtseite des Mehrschichtkörpers abgewandten Oberfläche des Kunststoffträgers sowie optional eines Teils der Sichtseitenoberfläche des Kunststoffträgers mit einer galvanostabilen Schicht, bevorzugt einem Lack, welche im Verfahrensschritt (3a) die chemische, elektrochemische oder physikalische Metallabscheidung und somit im Verfahrensschritt (3c) die Galvanisierung in diesem Bereich des Kunststoffträgers lokal verhindert,
   (3) elektrochemische Abscheidung einer bevorzugt mehrlagigen Metallschicht auf dem im Schritt (2) nicht mit einer galvanostabilen Schicht abgedeckten Teil der Oberflächen des Kunststoffträgers, wobei der Verfahrensschritt (3) folgende Teilschritte umfasst:
      (3a) Erzeugung einer dünnschichtigen Metallschicht, bevorzugt einer Schicht aus Palladium, Kupfer oder Nickel, auf dem Kunststoffträger in einem chemischen, elektrochemischen oder physikalischen Verfahren, bevorzugt ausgewählt aus Abscheiden aus kolloidaler Lösung, Direktmetallisierung oder Bedampfung,
      (3b) optional partielles Abtragen der im Verfahrensschritt (3a) erzeugten dünnschichtigen Metallschicht zur Erzeugung von nicht mit der Metalldünnschicht bedeckten Bereichen auf dem Kunststoffträger, bevorzugt durch ein Verfahren ausgewählt aus Ätzung oder Laserablation,
      (3c) galvanisches Fertigstellen der bevorzugt mehrlagigen metallischen Oberflächenbeschichtung umfassend mindestens einen elektrochemischen Metallabscheidungsschritt, wobei die im Verfahrensschritt (3b) erzeugten nicht mit der Metalldünnschicht bedeckten Bereiche auf dem Kunststoffträger nicht galvanisiert werden, und
   (4) optional lokale Entfernung der auf die Kunststoffträgeroberfläche aufgebrachten bevorzugt mehrlagigen Metallschicht durch mechanische, chemische und/oder physikalische Verfahren unter Ausbildung von Durchbrechungen der Metallschicht und lokaler Freilegung der Kunststoffträgeroberfläche,
dadurch gekennzeichnet, dass mindestens einer der optionalen Verfahrensschritte (2), (3b) und (4) in dem Verfahren zur Anwendung kommt und dadurch mindestens eine Aussparung in der bevorzugt mehrlagigen Metallschicht auf der Sichtseite des Mehrschichtkörpers resultiert und, sofern auch die der Sichtseite abgewandte Seite des Mehrschichtkörpers im Verfahrensschritt (3) mit einer Metallschicht beaufschlagt wird, auch auf dieser der Sichtseite abgewandten Seite des Mehrschichtkörpers mindestens eine Aussparung in der Metallschicht resultiert.

### Beispiele

### Komponente A-1:

Lineares Polycarbonat auf Basis Bisphenol-A mit einem gewichtsgemittelten Molekulargewicht M_{w} von 24.000 g/mol (bestimmt durch GPC bei Raumtemperatur in Methylenchlorid gegen einen BPA-PC-Standard).

### Komponente A-2:

Lineares Polycarbonat auf Basis Bisphenol-A mit einem gewichtsgemittelten Molekulargewicht M_{w} von 28.000 g/mol (bestimmt durch GPC bei Raumtemperatur in Methylenchlorid gegen einen BPA-PC-Standard).

### Komponente B-1:

Acrylnitril(A)-Butadien(B)-Styrol(S)-Polymer, hergestellt im Masse-Polymerisationsverfahren, welches eine disperse Phase aus mit Styrol-Acrylnitril-Copolymerisat gepfropften Kautschukpartikeln basierend auf einem Polybutadienkautschuk als Pfropfgrundlage enthaltend als separierte disperse Phase eingeschlossenes Styrol-Acrylnitril-Copolymerisat sowie eine nicht chemisch an die Kautschukpartikel gebundene und nicht in den Kautschukpartikeln eingeschlossene Styrol-Acrylnitril-Copolymerisat-Matrix enthält. Komponente B-1 weist ein A:B:S-Verhältnis von 23:10:67 Gew.-% und einen Gelgehalt, bestimmt als in Aceton unlöslicher Anteil, von 20 Gew.-% auf. Der in Aceton lösliche Anteil der Komponente B-1 weist ein gewichtsgemitteltes Molekulargewicht M_{w} (gemessen per GPC in Tetrahydrofuran als Lösungsmittel mit Polystyrol als Standard) von 165 kg/mol auf. Die mittlere Partikelgröße der dispersen Phase D50, gemessen per Ultrazentrifugation, beträgt 0,85 µm. Die Schmelzeflussrate (MVR) der Komponente B-1, gemessen nach ISO 1133 (Version von 2012) bei 220°C mit einer Stempellast von 10 kg, beträgt 6,7 ml/10 min.

### Komponente B-2:

Acrylnitril(A)-Butadien(B)-Styrol(S)-n-Butylacrylat(BA)-Polymer, hergestellt im Masse-Polymerisationsverfahren, welches eine disperse Phase aus mit Styrol-Acrylnitril-n-Butylacrylat-Terpolymerisat gepfropften Kautschukpartikeln basierend auf einem Polybutadienkautschuk als Pfropfgrundlage enthaltend als separierte disperse Phase eingeschlossenes Styrol-Acrylnitril-n-Butylacrylat Terpolymerisat sowie eine nicht chemisch an die Kautschukpartikel gebundene und nicht in den Kautschukpartikeln eingeschlossene Styrol-Acrylnitril-Copolymerisat-Matrix enthält. Komponente B-2 weist ein A:B:S:BA-Verhältnis von 22,5:10:63:4,5 Gew.-% und einen Gelgehalt, bestimmt als in Aceton unlöslicher Anteil, von 19 Gew.-% auf. Der in Aceton lösliche Anteil der Komponente B-2 weist ein gewichtsgemitteltes Molekulargewicht M_{w} (gemessen per GPC in Tetrahydrofuran als Lösungsmittel mit Polystyrol als Standard) von 115 kg/mol auf. Die mittlere Partikelgröße der dispersen Phase D50, gemessen per Ultrazentrifugation, beträgt 0,50 µm. Die Schmelzeflussrate (MFR) der Komponente C-1, gemessen nach ISO 1133 (Version von 2012) bei 220°C mit einer Stempellast von 10 kg, beträgt 28 g/10 min.

### Komponente B-3

Acrylnitril-Butadien-Styrol-Pfropfpolymerisat mit Kern-Schale-Struktur, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks als Pfropfgrundlage. Diese Polybutadienkautschuk-Pfropfgrundlage weist eine bimodale Teilchengrößenverteilung mit Maxima bei 0,28 µm und 0,40 µm und eine mittlere Partikelgröße D50, gemessen per Ultrazentrifugation, von 0,35 µm auf.

Die Komponente B-3 enthält kein in den Kautschukpartikeln eingeschlossenes Styrol-Acrylnitril-Copolymerisat.

### Komponente B-4

Acrylnitril-Butadien-Styrol-Pfropfpolymerisat mit Kern-Schale-Struktur, hergestellt durch Emulsions-Polymerisation von 42 Gew.-% bezogen auf das ABS-Polymerisat einer Mischung aus 26 Gew.-% Acrylnitril und 74 Gew.-% Styrol in Gegenwart von 58 Gew.-% bezogen auf das ABS-Polymerisat eines agglomerierten partikulären Polybutadienkautschuks als Pfropfgrundlage. Diese Polybutadienkautschuk-Pfropfgrundlage weist eine im Vergleich zu der in Komponente B-3 verwendeten Pfropfgrundlage deutlich breitere und monomodale Teilchengrößenverteilung auf. Die mittlere Partikelgröße D50, gemessen per Ultrazentrifugation, liegt jedoch im ähnlichen Bereich wie bei der Komponente B-3 bei 0,38 µm.

Die Komponente B-4 enthält kein in den Kautschukpartikeln eingeschlossenes Styrol-Acrylnitril-Copolymerisat.

### Komponente B-5

Styrol-Acrylnitril-Copolymer, hergestellt im Masse-Polymerisationsverfahren, mit einem Acrylnitrilgehalt von 23 Gew.-% und mit einem gewichtsgemitteltem Molekulargewicht M_{w} von 100.000 Da gemessen per GPC bei Raumtemperatur in Tetrahydrofuran mit Polystyrol als Standard.

### Komponente C1:

### Pentaerythrittetrastearat

### Komponente C-2:

Irganox^{™} B900 (BASF, Ludwigshafen, Deutschland)
Mischung aus 80 Gew.-% Tris(2,4-di-tert.-butyl-phenyl)-phospit (Irgafos^{™} 168)und 20 Gew.-% 2,6-Di-tert.-butyl-4-(octadecanoxycarbonylethyl)phenol (Irganox^{™} 1076)

### Komponente C3:

Irganox^{™} 1076 (BASF, Ludwigshafen, Deutschland)
2,6-Di-tert.-butyl-4-(octadecanoxycarbonylethyl)phenol

### Herstellung und Prüfung der erfindungsgemäßen Formmassen

Die Herstellung der Formmassen erfolgte auf einem Zweiwellenextruder ZSK25 der Fa. Coperion, Werner & Pfleiderer (Stuttgart, Deutschland) bei einer Massetemperatur von 260°C und unter Anlegen eines Unterdrucks von 100 mbar (absolut).

Die Prüfkörper wurden bei einer Massetemperatur von 260°C und bei einer Werkzeugtemperatur von 80°C auf einer Spritzgießmaschine Typ Arburg 270 E hergestellt.

Die Schmelzeviskosität wurde bestimmt bei einer Temperatur von 260°C und einer Scherrate von 1000 s⁻¹ gemäß ISO 11443 (Version von 2014).

Die IZOD-Kerbschlagzähigkeit wurde bestimmt bei Temperaturen im Bereich von -50°C bis 23°C an Prüfstäben der Dimension von 80 mm x 10 mm x 4 mm gemäß ISO 180/1A (Version von 2013). Aus den Messungen bei unterschiedlichen Temperaturen wurde die Zäh-Spröd-Übergangstemperatur als diejenige Temperatur ermittelt, bei der 50% der Prüfkörper in dem Test spröd und 50% zäh brechen.

Zur Beurteilung der Materialduktilität unter multiaxialer Belastung bei tiefen Temperaturen wurde ein Durchstoßversuch gemäß ISO 6603-2 (Version von 2002) bei -20°C an jeweils zehn Prüfkörpern der Dimension von 60 mm x 60 mm x 2 mm durchgeführt. Als Maß für die Materialduktilität unter multiaxialer Belastung dient dabei der prozentualer Anteil der Sprödbrüche. Unter einem Sprödbruch wird dabei ein Bruchversagen verstanden, in denen Teile des Prüfkörpers beim Durchstoßversuch splitternd herausgebrochen werden und/oder die Prüfkörper eine instabile Rissausbreitung zeigen, wodurch der Prüfkörper im Test entlang eines solches Risses komplett in zwei Teile auseinanderbricht.

Der Elastizitätsmodul E und die Bruchdehnung wurde bestimmt an Schulterstäben der Dimension von 170 mm x 10 mm x 4 mm bei 23°C gemäß ISO 527 (Version von 1996) mit einer Dehnrate von 1 mm/min (Elastizitätsmodul) bzw. 5 mm/min (Bruchdehnung).

Als Maß für die Wärmeformbeständigkeit wird die Erweichungstemperatur Vicat B/120 bestimmt an Prüfstäben der Dimension von 80 mm x 10 mm x 4 mm gemäß ISO 180/1A (Version von 2014).

Als Maß für die Durchleuchtbarkeit wurde der Totaltransmissionsgrad gemäß ISO 13468-2 (Version von 2006) (Lichtquelle: D65, Beobachter: 10°) an Prüfkörpern der Dimension von 60 mm x 40 mm x 2 mm (d.h. bei einer Materialdicke von 2 mm) bestimmt.

Als Maß für die Lichtdiffusivität wurde der Halbwertswinkel = Half Power Angle (HPA) der Lichtintensität verwendet. Größere Halbwertswinkel bedeuten dabei stärkere Lichtstreuung. Zur Ermittlung des Halbwertswinkels wird die Intensität des Lichts nach Durchleuchtung eines Prüfkörpers der Dimension von 60 mm x 40 mm x 2 mm (d.h. mit einer Materialdicke von 2 mm) in Abhängigkeit des Polarwinkels gemessen relativ zum Einfalllichtstrahl im Bereich von 0° bis 90° gemessen. Die erhaltenen Werte werden auf den Intensitätswert, welcher bei einem Winkel von 0° gemessen wird, normiert, so dass die normierte Intensität in Abhängigkeit vom Polarwinkel θ zwischen 0 und 1 variiert mit I(0°) =1. Der Halbwertswinkel (HPA) ist dabei als der Winkel definiert, bei dem die normierte Intensität auf 0.5 abgefallen ist, das heißt I(HPA)=0.5. Bei dieser Definition beträgt der theoretisch maximal mögliche Halbwertswinkel 60°.

Aus der erfindungsgemäßen Zusammensetzung 11 wurde ein Formkörper hergestellt, auf den mit einem wie oben beschriebenen Galvanisierungsverfahren eine Metallschicht aufgebracht werden konnte.

**Tabelle 1: Zusammensetzungen und ihre Eigenschaften**

| **Komponente** | 1 | V2 | V3 | V4 | V5 | V6 | 7 | 8 | V9 | 10 | 11 | 12 | V13 |
|---|---|---|---|---|---|---|---|---|---|---|---|---|---|
| A-1 | 80 | 80 | 80 | 80 | 80 | 80 | 60 | 70 | 90 | | | | |
| A-2 | | | | | | | | | | 60 | 70 | 80 | 90 |
| B-1 | 20 | | | | | | 40 | 30 | 10 | 40 | 30 | 20 | 10 |
| B-2 | | 20 | | | | | | | | | | | |
| B-3 | | | 5 | 2,5 | | | | | | | | | |
| B-4 | | | | | 5 | 2,5 | | | | | | | |
| B-5 | | | 15 | 17,5 | 15 | 17,5 | | | | | | | |
| C-1 | 0,5 | 0,5 | 0,5 | 0,5 | 0,5 | 0,5 | 0,5 | 0,5 | 0,5 | 0,5 | 0,5 | 0,5 | 0,5 |
| C-2 | 0,1 | 0,1 | 0,1 | 0,1 | 0,1 | 0,1 | 0,1 | 0,1 | 0,1 | 0,1 | 0,1 | 0,1 | 0,1 |
| C-3 | 0,2 | 0,2 | 0,2 | 0,2 | 0,2 | 0,2 | 0,2 | 0,2 | 0,2 | 0,2 | 0,2 | 0,2 | 0,2 |
| **Berechnete Größe** | | | | | | | | | | | | | |
| Kautschuk -Gehalt in der Zusammensetzung [Gew.-%] | 2,0 | 2,0 | 2,8 | 1,4 | 2,9 | 1,4 | 4,0 | 3,0 | 1,0 | 4,0 | 3,0 | 2,0 | 1,0 |
| **Eigenschaften** | | | | | | | | | | | | | |
| Transmission [%] | 52 | 46 | 46 | 51 | 44 | 49 | 47 | 49 | 60 | 46 | 48 | 52 | 58 |
| Halbwertswinkel [°] | 50 | 24 | 3 | 2 | 34 | 2 | 57 | 55 | 2 | 56 | 55 | 50 | 2 |
| Schmelzeviskosität [Pas] | 248 | 200 | 228 | 213 | 228 | 225 | 174 | 202 | 312 | 204 | 230 | 293 | 454 |
| Kerbschlagzähigkeit bei -30°C [kJ/m²] | 21 | 16 | 15 | 10 | 15 | 9 | 20 | 24 | 13 | 43 | 43 | 27 | 13 |
| Zäh-Spröd-Übergangstemperatur [°C] | 0 | 10 | 15 | >23 | 15 | >23 | -15 | -25 | >23 | -45 | -35 | -25 | >23 |
| Durchstoßversuch [% Sprödbruch] | 70 | 100 | 100 | 100 | 70 | 70 | 90 | 50 | 20 | 0 | 0 | 80 | 80 |
| E-Modul | 2325 | 2426 | 2432 | 2529 | 2410 | 2524 | 2289 | 2307 | 2341 | 2273 | 2310 | 2348 | 2356 |
| Reißdehnung | 60 | 101 | 54 | 57 | 59 | 52 | 62 | 59 | 53 | 53 | 85 | 94 | 86 |
| Vicat B120 | 135 | 134 | 135 | 134 | 135 | 134 | 124 | 131 | 138 | 123 | 131 | 136 | 138 |

Die Daten in Tabelle 1 zeigen, dass die erfindungsgemäßen Formmassen, welche als Komponente B die erfindungsgemäße Komponente B-1 enthalten und sich hinsichtlich des Polybutadienkautschuk-Gehaltes im erfindungsgemäßen Bereich befinden, eine überraschende vorteilhafte Kombination aus verbesserter Lichttransmission und hoher Lichtdiffusivität (Streukraft) aufweisen. Weiterhin zeigen die erfindungsgemäßen Formmassen eine vorteilhafte Kombination aus verbesserter Schmelzefließfähigkeit (reduzierter Schmelzeviskosität), guten mechanischen Eigenschaften, insbesondere auch eine gute Materialzähigkeit selbst bei tiefen Temperaturen und hohe Wärmeformbeständigkeit. Die nicht erfindungsgemäßen Formmassen, die als Komponente B die nicht erfindungsgemäßen Emulsions-ABS-Komponenten B-3 oder B-4 oder eine nicht erfindungsgemäße Masse-ABS-Komponente B-2 enthalten, erfüllen diese technische Aufgabe der Erfindung dagegen nicht. Gleiches gilt für die Formmassen aus den Zusammensetzungen V9 und V13, welche hinsichtlich ihres Gehalts an Polybutadienkautschuk außerhalb des erfindungsgemäßen Bereiches liegen.

## Patentansprüche

1. Mehrschichtkörper,
umfassend
(I) eine Trägerschicht aus einer thermoplastischen Formmasse enthaltend
A) mindestens einen Vertreter ausgewählt aus der Gruppe bestehend aus aromatischem Polycarbonat und aromatischem Polyestercarbonat,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,
wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern,
wobei die thermoplastische Formmasse weniger als 2 Gew.-% an von Komponente B) verschiedenen, kautschukbasierten Pfropfpolymeren enthält und
wobei die thermoplastische Formmasse einen Kautschukgehalt von mindestens 2,0 Gew.-% aufweist, und
(II) eine Metallschicht, bevorzugt eine mehrlagige Metallschicht, die mindestens eine Aussparung aufweist.

2. Mehrschichtkörper gemäß Anspruch 1, wobei die mindestens eine Aussparung die Form von mindestens einem Symbols, eines Musters, eines Lochs, einer Linie oder eines Zeichens aufweist oder es sich um punktförmige Aussparungen handelt, die in Form von mindestens einem Symbol, einem Muster, einem Loch, einer Linie oder einem Zeichen angeordnet sind.

3. Mehrschichtkörper gemäß einem der vorhergehenden Ansprüche, wobei die Dicke der Metallschicht 5 bis 200 µm beträgt

4. Mehrschichtkörper gemäß einem der vorhergehenden Ansprüche, wobei die Metallschicht eine mehrlagige Metallschicht bestehend aus mindestens drei Lagen ist.

5. Mehrschichtkörper gemäß einem der vorhergehenden Ansprüche, wobei die Metallschicht aus drei Metalllagen besteht, ausgehend von der Trägerschicht (I),
(i) aus einer ersten Lage aus Kupfer,
(ii) einer zweiten Lage aus Nickel,
(iii) und einer dritten Lage aus Chrom.

6. Mehrschichtkörper gemäß einem der vorhergehenden Ansprüche 1 bis 4, wobei die Metallschicht aus vier Metalllagen besteht, ausgehend von der Trägerschicht (I),
(i) aus einer ersten Lage aus Nickel,
(ii) einer zweiten Lage aus Kupfer,
(iii) einer dritten Lage aus Nickel,
(iv) und einer vierten Lage aus Chrom.

7. Mehrschichtkörper gemäß einem der Ansprüche 5 bis 6, wobei die Lage aus Chrom eine Dicke von 100 nm bis 3 µm aufweist.

8. Mehrschichtkörper gemäß einem der vorhergehenden Ansprüche, wobei die Dicke der Trägerschicht (I) im Bereich von 0,5 bis 5 mm liegt.

9. Mehrschichtkörper gemäß einem der Ansprüche 1 bis 7, wobei es sich bei der Trägerschicht (I) um eine Folie mit einer Dicke von 0,1 bis 1 mm handelt.

10. Mehrschichtkörper gemäß einer der vorhergehenden Ansprüche, **dadurch gekennzeichnet, dass** der Mehrschichtkörper aus mindestens drei Schichten besteht, umfassend in dieser Reihenfolge
- eine bevorzugt mehrlagige Metallschicht (II),
- die Trägerschicht (I) und
- eine Hinterspritzungsschicht (III) aus einer thermoplastischen Formmasse, welche aus einer aromatisches Polycarbonat enthaltenden Zusammensetzung hergestellt ist.

11. Mehrschichtkörper gemäß einem der vorhergehenden Ansprüche, wobei die Trägerschicht (I)
30 bis 85 Gew.-%, der Komponente A,
14 bis 69 Gew.-% der Komponente B,
und 0,05 bis 20 Gew.-% der Komponente C
enthält.

12. Mehrschichtkörper gemäß einem der vorhergehenden Ansprüche, wobei die Trägerschicht einen Kautschukgehalt von 2,6 bis 4,1 Gew.-% aufweist.

13. Verwendung einer thermoplastischen Formmasse enthaltend
A) mindestens einen Vertreter ausgewählt aus der Gruppe bestehend aus aromatischem Polycarbonat und aromatischen Polyestercarbonat,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln
und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,
wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern
wobei die thermoplastische Formmasse weniger als 2 Gew.-%, an von Komponente B) verschiedenen, kautschukbasierten Pfropfpolymeren enthält und
wobei die thermoplastische Formmasse einen Kautschukgehalt von mindestens 2,0 Gew.-% aufweist,
als Trägerschicht in einem Mehrschichtkörper,
wobei der Mehrschichtkörper folgende Komponenten umfasst:
(I) die Trägerschicht,
(II) eine Metallschicht, bevorzugt eine mehrlagige Metallschicht, die eine oder mehrere Aussparungen aufweist.

14. Beleuchtungs- oder Anzeigeeinheit, umfassend
a) einen Mehrschichtkörper gemäß einem der Ansprüche 1 bis 12
b) eine Lichtquelle, welche Licht mit mindestens einer Wellenlänge im Wellenlängenbereich des Spektrums von 380 bis 780 nm ausstrahlt,
wobei die Lichtquelle b) so angeordnet ist, dass die Trägerschicht (I) des Mehrschichtkörpers a) von dem von der Lichtquelle b) abgestrahlten Licht durchstrahlt wird.

15. Verfahren zur Herstellung eines Mehrschichtkörpers,
umfassend die Schritte
(1) Formen eines Kunststoffträgers aus einer thermoplastischen Formmasse enthaltend
A) mindestens einen Vertreter ausgewählt aus der Gruppe bestehend aus aromatischem Polycarbonat und aromatischen Polyestercarbonat,
B) kautschukmodifiziertes Vinyl(co)polymerisat aus
B.1) 80 bis 95 Gew.-%, bezogen auf das kautschukmodifizierte Vinyl(co)polymerisat B, Struktureinheiten abgeleitet von wenigstens einem Vinylmonomeren und
B.2) 5 bis 20 Gew.-%, bezogen auf das kautschukmodifizierte Vinyl(co)polymerisat B, einer oder mehrerer kautschukelastischer Pfropfgrundlagen mit Glasübergangstemperaturen < -50°C enthaltend mindestens 50 Gew.-%, bezogen auf B.2, an vom 1,3-Butadien abgeleiteten Struktureinheiten,
wobei das kautschukmodifizierte Vinyl(co)polymerisat B
(i) eine disperse Phase bestehend aus
(i.1) mit Vinyl(co)polymerisat aus Struktureinheiten gemäß B.1 gepfropften Kautschukpartikeln
und
(i.2) in den Kautschukpartikeln als separierte disperse Phase eingeschlossenes Vinyl(co)polymerisat ebenfalls aus Struktureinheiten gemäß B.1
und
(ii) eine nicht an die Kautschukpartikel gebundene und nicht in diese Kautschukpartikel eingeschlossene kautschukfreie Vinyl(co)polymerisat-Matrix bestehend aus Struktureinheiten gemäß B.1
enthält,
wobei die disperse Phase gemäß (i) einen mittleren Durchmesser D50 gemessen per Ultrazentrifugation von 0,7 bis 2,0 µm aufweist,
C) optional mindestens eine weitere Komponente ausgewählt aus Polymeradditiven und polymeren Blendpartnern.
wobei die thermoplastische Formmasse weniger als 2 Gew.-%, an von Komponente B) verschiedenen, kautschukbasierten Pfropfpolymeren enthält und
wobei die thermoplastische Formmasse einen Kautschukgehalt von mindestens 2,0 Gew.-% aufweist,
(2) optional Abdeckung zumindest eines Teils der der Sichtseite des Mehrschichtkörpers abgewandten Oberfläche des Kunststoffträgers sowie optional eines Teils der Sichtseitenoberfläche des Kunststoffträgers mit einer galvanostabilen Schicht, bevorzugt einem Lack, welche im Verfahrensschritt (3a) die chemische, elektrochemische oder physikalische Metallabscheidung und somit im Verfahrensschritt (3c) die Galvanisierung in diesem Bereich des Kunststoffträgers lokal verhindert,
(3) elektrochemische Abscheidung einer bevorzugt mehrlagigen Metallschicht auf dem im Schritt (2) nicht mit einer galvanostabilen Schicht abgedeckten Teil der Oberflächen des Kunststoffträgers, wobei der Verfahrensschritt (3) folgende Teilschritte umfasst:
(3a) Erzeugung einer dünnschichtigen Metallschicht, bevorzugt einer Schicht aus Palladium, Kupfer oder Nickel, auf dem Kunststoffträger in einem chemischen, elektrochemischen oder physikalischen Verfahren, bevorzugt ausgewählt aus Abscheiden aus kolloidaler Lösung, Direktmetallisierung oder Bedampfung,
(3b) optional partielles Abtragen der im Verfahrensschritt (3a) erzeugten dünnschichtigen Metallschicht zur Erzeugung von nicht mit der Metalldünnschicht bedeckten Bereiche auf dem Kunststoffträger, bevorzugt durch ein Verfahren ausgewählt aus Ätzung oder Laserablation,
(3c) galvanisches Fertigstellen der bevorzugt mehrlagigen metallischen Oberflächenbeschichtung umfassend mindestens einen elektrochemischen Metallabscheidungsschritt, wobei die im Verfahrensschritt (3b) erzeugten nicht mit der Metalldünnschicht bedeckten Bereiche auf dem Kunststoffträger nicht galvanisiert werden, und
(4) optional lokale Entfernung der auf die Kunststoffträgeroberfläche aufgebrachten bevorzugt mehrlagigen Metallschicht durch mechanische, chemische und/oder physikalische Verfahren unter Ausbildung von Durchbrechungen der Metallschicht und lokaler Freilegung der Kunststoffträgeroberfläche,
**dadurch gekennzeichnet, dass** mindestens einer der optionalen Verfahrensschritte (2), (3b) und (4) in dem Verfahren zur Anwendung kommt und dadurch mindestens eine Aussparung in der bevorzugt mehrlagigen Metallschicht auf der Sichtseite des Mehrschichtkörpers resultiert und, sofern auch die der Sichtseite abgewandte Seite des Mehrschichtkörpers im Verfahrensschritt (3) mit einer Metallschicht beaufschlagt wird, auch auf dieser der Sichtseite abgewandten Seite des Mehrschichtkörpers mindestens eine Aussparung in der Metallschicht resultiert.
